# EUROPEAN PATENT APPLICATION

(11) **EP 4 767 802 A1**
(43) Date of publication of application: **01.07.2026**
(21) Application number: 25199770.6
(22) Date of filing: 02.09.2025
(51) Int. Cl.: A01B 69/04, A01D 41/12

(54) **FOLLOWER VEHICLE TARGET POINT SELECTION BASED ON IMPLEMENT PATH**

(30) Priority: 26.12.2024 US 202419002113
(71) Applicant: Deere & Company, Moline, IL 61265 (US)
(72) Inventor: Lalwani, Prateek, Pune (IN); White, Michael, Polk City (US)
(74) Representative: Reddie & Grose LLP

(57) **Abstract**

Generating a desired position for a first vehicle from a next position of an implement attached to the first vehicle is described. A current position of the implement is obtained. The next position of the implement is identified. A desired position of the first vehicle is derived from the next position of the implement. The desired position and the next position are such that when the first vehicle is at the desired position, the implement is at the next position. The next position of the implement may be based on a position of a second vehicle. In an example, the first vehicle may be a tractor, the implement may be a grain cart, and the second vehicle may be a combine harvester.

## Description

### TECHNICAL FIELD

This disclosure relates generally to agricultural machinery, and more specifically to follower vehicle target point selection based on an implement path.

### BACKGROUND

In farming operations, different machine types are used for different farming phases. For example, strip tilling may involve the use of a strip-till machine, planting is done with a planter, fertilizing with a fertilizer spreader, weed management with sprayers, and harvesting with a combine harvester. Each of these machines may have different operational widths (i.e., the number of rows they can work on concurrently). To illustrate, a strip-till machine may prepare 12 rows, a planter might plant 24 rows, and a combine harvester might harvest 12 rows at a time.

### SUMMARY

Disclosed herein are implementations of generating a path plan for a vehicle using a path plan for an implement attached to the vehicle.

In an aspect of the present disclosure, a method is disclosed. The method includes obtaining a current position of an implement attached to a first vehicle that moves the implement and identifying a next position of the implement. The method further includes deriving, based on the next position of the implement, a desired position of the first vehicle. The desired position and the next position are such that when the first vehicle is at the desired position, the implement is at the next position. Additionally, the method includes navigating the first vehicle to the desired position.

In certain configurations, the identifying the next position of the implement may include identifying a path plan for the implement.

In certain configurations, the path plan for the implement may be a path plan at a constant offset from a path plan for a second vehicle.

In certain configurations, the path plan for the second vehicle may be based on historical path data.

In certain configurations, a distance of the constant offset may be determined based on an operational parameter of the second vehicle.

In certain configurations, the deriving the desired position of the first vehicle may include deriving a path plan for the first vehicle, the path plan for the first vehicle and the path plan for the implement may be such that operating the first vehicle according to the path plan for the first vehicle would maintain the implement along the path plan for the implement, and the navigating the first vehicle to the desired position may include navigating the first vehicle according to the path plan for the first vehicle.

In certain configurations, the method may further include displaying at least a portion of the path plan for the first vehicle at a display associated with the first vehicle.

In certain configurations, the obtaining the current position of the implement may include setting a homepoint at the current position of the implement, and the identifying the next position of the implement may include detecting a movement of the homepoint to a new location and setting the next position of the implement to the new location.

In certain configurations, the deriving the desired position of the first vehicle may be based on the next position of the implement and an inverse kinematic model.

In certain configurations, the method may further include determining, before navigating the first vehicle to the desired position, that the first vehicle is within an operational zone.

In certain configurations, the desired position of the first vehicle may be derived by the first vehicle.

In certain configurations, the next position of the implement may be identified by the second vehicle, and the desired position of the first vehicle is derived by the second vehicle.

In certain configurations, the first vehicle may be a tractor, the second vehicle may be a combine harvester, and the implement may be a grain cart.

In another aspect of the present disclosure, a system includes one or more memories and one or more processors. The one or more processors may be configured to execute instructions stored in the one or more memories to perform the method or any of the configurations described above.

In another aspect of the present disclosure, a non-transitory computer-readable storage medium includes executable instructions that, when executed by one or more processors, facilitate performance of operations. The operations may include operations that perform the method or any of the configurations described above.

In another aspect of the present disclosure, a system includes one or more memories and one or more processors. The one or more processors are configured to execute instructions stored in the one or more memories to obtain a current position of an implement attached to a first vehicle that moves the implement and identify a next position of the implement. The one or more processors are further configured to execute instructions to derive, based on the next position of the implement, a desired position of the first vehicle, wherein the desired position and the next position are such that when the first vehicle is at the desired position, the implement is at the next position. Additionally, the one or more processors are configured to execute instructions to navigate the first vehicle to the desired position.

In certain configurations, the instructions to identify the next position of the implement may include instructions to identify a path plan for the implement.

In certain configurations, the path plan for the implement may be a path plan at a constant offset from a path plan for a second vehicle.

In certain configurations, the instructions to derive the desired position of the first vehicle may include instructions to derive a path plan for the first vehicle, the path plan for the first vehicle and the path plan for the implement may be such that operating the first vehicle according to the path plan for the first vehicle would maintain the implement along the path plan for the implement, and the instructions to navigate the first vehicle to the desired position may include instructions to navigate the first vehicle according to the path plan for the first vehicle.

In certain configurations, the instructions to obtain the current position of the implement may include instructions to set a homepoint at the current position of the implement, and the instructions to identify the next position of the implement may include instructions to detect a movement of the homepoint to a new location and set the next position of the implement to the new location.

In certain configurations, the instructions to derive the desired position of the first vehicle are based on the next position of the implement and an inverse kinematic model.

In certain configurations, the one or more processors may be further configured to execute instructions stored in the one or more memories to determine, before the instructions to navigate the first vehicle to the desired position, that the first vehicle is within an operational zone.

In another aspect of the present disclosure, one or more non-transitory computer readable media storing instructions operable to cause one or more processors to perform operations are disclosed. The operations include obtaining a current position of an implement attached to a first vehicle that moves the implement and identifying a next position of the implement. The method further includes deriving, based on the next position of the implement, a desired position of the first vehicle. The desired position and the next position are such that when the first vehicle is at the desired position, the implement is at the next position. Additionally, the method includes navigating the first vehicle to the desired position.

In certain configurations, the identifying the next position of the implement may include identifying a path plan for the implement at a constant offset from a path plan for a second vehicle.

In certain configurations, the deriving the desired position of the first vehicle may include deriving a path plan for the first vehicle, the path plan for the first vehicle and the path plan for the implement may be such that operating the first vehicle according to the path plan for the first vehicle would maintain the implement along the path plan for the implement, and the navigating the first vehicle to the desired position may include navigating the first vehicle according to the path plan for the first vehicle.

In certain configurations, the obtaining the current position of the implement may include setting a homepoint at the current position of the implement, and the identifying the next position of the implement may include detecting a movement of the homepoint to a new location and setting the next position of the implement to the new location.

In certain configurations, the deriving the desired position of the first vehicle may be based on the next position of the implement and an inverse kinematic model.

### BRIEF DESCRIPTION OF THE DRAWINGS

The disclosure is best understood from the following detailed description when read in conjunction with the accompanying drawings. It is emphasized that, according to common practice, the various features of the drawings are not to-scale. On the contrary, the dimensions of the various features are arbitrarily expanded or reduced for clarity.
FIG. 1 is a block diagram of a system for setting a vehicle path plan based on equipment models.
FIG. 2A illustrates an example of using kinematic models to place an auger of a combine into the center of an implement attached to a tractor.
FIG. 2B illustrates parameters of a kinematic model of the combine.
FIG. 2C illustrates parameters of a kinematic model of the tractor-implement combination.
FIG. 3A illustrates identifying of a path plan for a subsequent machine.
FIG. 3B illustrates generating a first vehicle path plan based on a second vehicle path plan.
FIG. 4 is an example of a computing device.
FIG. 5 illustrates deriving a vehicle path plan from an implement path plan.
FIG. 6 is a flowchart of an example of a technique for navigating the vehicle to a desired position of the vehicle based on a next position of the implement.
FIG. 7 illustrates deriving a follower path plan from an implement path plan where the implement path plan is at a constant offset from a leader path plan.
FIG. 8 is a flowchart of an example of a technique for navigating a follower machine according to the follower path plan derived from the implement path plan.
FIG. 9 is a flowchart of an example of a technique for deriving the follower path plan based on the implement path plan where the implement path plan is at a constant offset from the leader path plan.
FIG. 10 is a block diagram illustrating identifying a follower path plan.
FIG. 11 illustrates user interfaces associated with a path planning software.

### DETAILED DESCRIPTION

Farming technologies are known and used for generating path plans for subsequent machines based on the path of a first machine. A path plan, in the context of farming and agricultural machinery, is a pre-defined route or set of guidance lines that directs the movements of farming equipment across a field. A path plan ensures that various agricultural operations, such as planting, fertilizing, spraying, and harvesting, are carried out in an organized and efficient manner. For example, the lines driven by a planter can be used to generate corresponding guidance lines for each row unit, which are then used to guide subsequent machines like sprayers and harvesters. To illustrate, assume a field where a planter has sown seeds in 24-row sections. GPS data from this planting operation can be used to create a path plan for subsequent machines, such as a sprayer and a combine harvester: the sprayer may follow the same 24-row sections, and the combine harvester, which can handle 12 rows at a time, follows a path plan that directs it to harvest in two passes for each 12-row section planted.

In certain farming phases, more than one machine may be involved. For example, in the harvesting step, the combine harvester (e.g., a leader machine) is not the only machine that will be used; a tractor (e.g., a follower machine) to which a grain cart (e.g., an implement) is attached for receiving crop from the combine harvester is also present. The crop harvested by the combine harvester is dumped into the grain cart via an unloading auger, which transfers the crop from the combine's storage tank to the cart. As another example, during the spraying phase, a sprayer (e.g., the leader machine) may be accompanied by a nurse tank vehicle (e.g., the follower machine) that supplies the sprayer with chemicals, ensuring continuous operation without frequent refilling stops.

Autonomous guidance for the follower machine (e.g., the tractor or nurse tank) may synchronize the speed and position of the follower machine relative to the leader machine (e.g., the combine harvester) based on a manually configured homepoint set between the leader machine and the follower machine. The operator of the follower machine may set the homepoint by driving the follower machine to align it with a reference point on the leader machine, such as the endpoint of an unloading auger or the edge of a sprayer boom, and then configuring a guidance system of the follower machine to maintain a specific offset distance and alignment relative to that reference point.

A "homepoint" refers to a designated relative position (e.g., an offset position) of one location (e.g., a point) of one machine with respect to another location (e.g., another point) of another machine. A homepoint serves, for example, as a reference point for synchronizing the movements of a combine harvester (e.g., a leader machine), with a tractor (e.g., a follower machine) towing a grain cart (e.g., an implement). A homepoint can be in line and lateral offset location relative to, for example, a combine that a tractor will return to every time the tractor synchronizes with the combine. The tractor can be guided to the home point position set in relation to the combine. The tractor maintains that position during operation. By setting a homepoint, the system (e.g., the combination of the leader machine, the follower machine, and the implement) can automate the alignment and movement of the machines, reducing the need for manual adjustments and improving the efficiency of the harvesting process.

However, when using a grain cart (e.g., an implement) towed by a tractor, an issue is that the grain cart will not always follow the path driven by the tractor. During straight portions of the path, the grain cart will follow directly behind the tractor along the same path. However, during curved portions of the path, the grain cart may have to follow an inside curve (i.e., a smaller curve or a curve with a shorter distance) in order to maintain a position with a spout of an auger of a combine. As such, in many applications, a position of the grain cart is of greater importance than a position of the tractor. For example, it may be desirable to place the grain cart at a specific position to receive grain.

Accordingly, implementations according to this disclosure solve this problem by determining a next (e.g., desired) position of the grain cart and deriving a desired position for the tractor based on the next position of the grain cart. Inverse kinematics may be used to derive the desired position. Navigating the tractor to the desired position will place the grain cart at the next position. Thus, the grain cart may be placed at a specific position to receive grain.

Implementations according to this disclosure may also solve this problem by identifying a path plan for the grain cart and deriving a path plan for the tractor from the path plan for the grain cart. Navigating the tractor along the path plan for the tractor may maintain the grain cart along the path plan for the grain cart. The path plan for the grain cart may be at a constant offset from a path plan for a combine harvester. Inverse kinematics may be used to derive the path plan for the tractor.

To describe some implementations in greater detail, reference is first made to examples of systems, machines, implements, hardware and software structures used to implement a system for deriving a desired position for the tractor using equipment models.

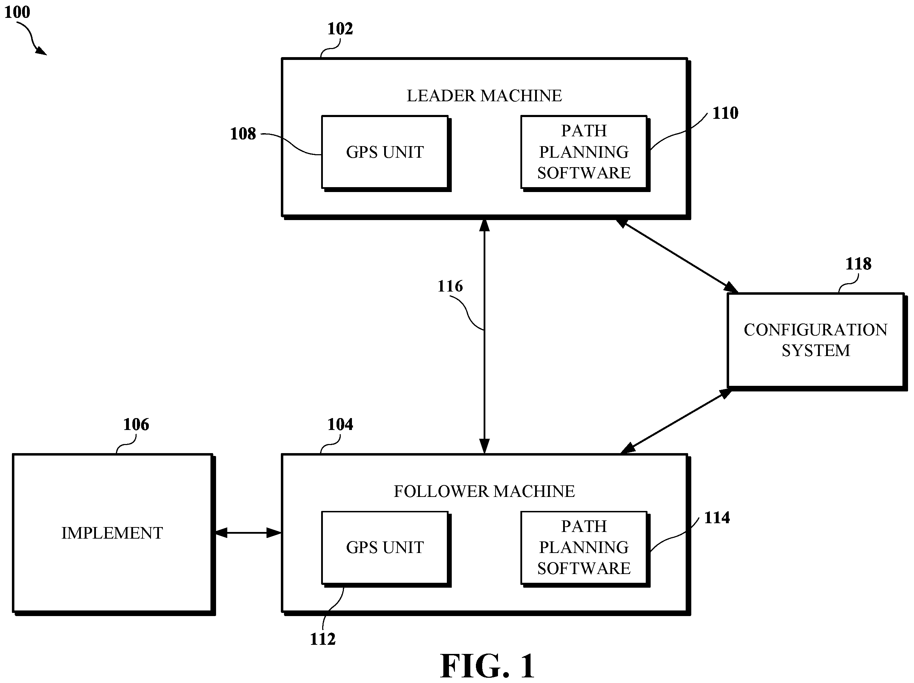

FIG. 1 is a block diagram of a system 100 for setting a follower machine path plan based on equipment models. The system 100 includes a leader machine 102 and a follower machine 104. The leader machine 102 can be a combine harvester, a forage harvester, a sugar cane harvester, or any other type of machine that is to be followed by a follower machine. In an example, the follower machine 104 can be a tractor towing an implement 106. The implement 106 may be a grain cart, a forage wagon, or multiple carts. The follower machine 104 can be any type of follower machine that traverses a field at a maintained relative position with respect to the leader machine.

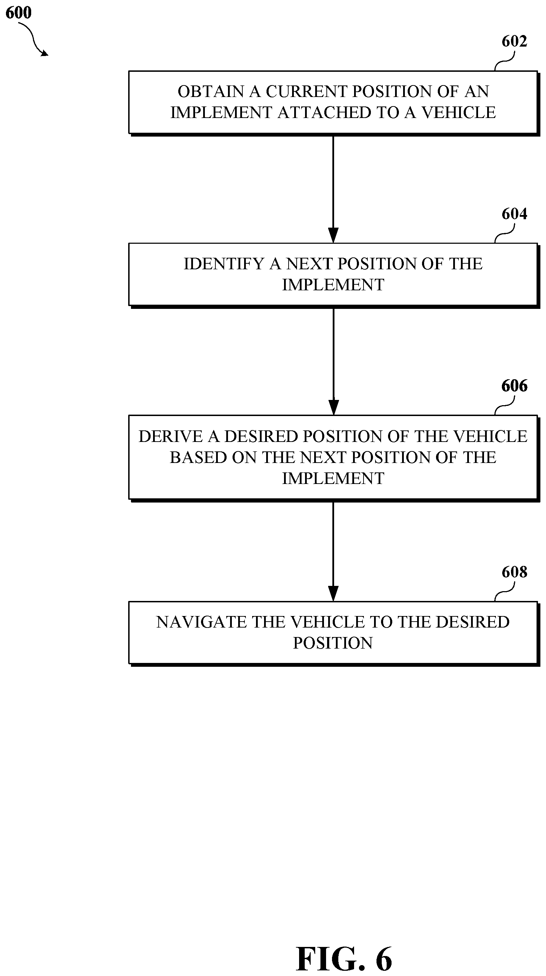

For simplicity, this disclosure uses statements such as "machine X performs an action Y." These statements should be understood to mean that a computing device (e.g., a controller) within machine X performs the action Y or executes instructions to cause machine X to perform the action Y. A software application, which is executable by the computing device and may be included in or work in conjunction with machine X, can also perform action Y or cause machine X to perform action Y The computing device may be as described with respect to FIG. 6.

The leader machine 102 is shown as including a GPS unit 108 and a path planning software 110. In some implementations, the leader machine 102 may not include the path planning software 110. The follower machine 104 is shown as including a GPS unit 112 and a path planning software 114. A GPS unit can be used to determine the precise geographic location of the respective machine by receiving signals from multiple GPS satellites and calculating the machine's position based on the time delay of the received signals. Alternatively, other positioning technologies such as Real-Time Kinematic (RTK) GPS, Radio Frequency Identification (RFID), Bluetooth Low Energy (BLE) beacons, Differential GPS (DGPS), and Long-Range Navigation (Loran) may be used to accomplish the same purpose.

The path planning software 110 can be used to obtain (e.g., identify, select, or receive) a path plan (e.g., a set of guidance lines) that the leader machine 102 is to traverse over on a field. The path planning software 114 can be used to derive (e.g., identify, calculate, or receive) a path plan for the follower machine based on a path plan for the implement 106. The path plan of the leader machine 102 is referred to as the "leader path plan," the path plan of the follower machine 104 is referred to as the "follower path plan," and the path plan of the implement 106 is referred to as the "implement path plan."

The leader path plan may be based on the traversal of the field by another or prior machine, such as a planter that has previously sown seeds in the field. This initial traversal provides the foundational data for creating an accurate leader path plan for the leader machine. The implement path plan may be obtained from the leader path plan. For example, the implement path plan may be at a constant offset from the leader path plan. The follower path plan, on the other hand, can be derived from the implement path plan using, for example, inverse kinematics. Inverse kinematics may use a follower kinematic model. The follower kinematic model may include detailed information about the physical characteristics and movement capabilities of the machine (e.g., the follower machine 104 and the implement 106), which allows the system 100 to generate a precise and effective path plan for the follower machine 104 that maintains the implement 106 along the implement path plan when the follower machine 104 navigates the follower path plan. A leader kinematic model may include detailed information about the physical characteristics and movement capabilities of the leader machine 102. The leader kinematic model may be used to identify an operational parameter of the leader machine 102 that is used to determine an offset for the implement path plan.

The leader kinematic model can be used to identify an initial alignment position (e.g., a lateral offset) between the leader machine 102 and the implement 106. To illustrate, and without limitations, an approaching tractor towing a grain cart can be guided to a predetermined lateral "home" position alongside a combine for unloading. The home position can be based on the operational parameter, which can include an auger length of the leader machine. The homepoint is a point in the leader machine 102 fixed coordinate system and can be based on a GPS unit of the leader machine 102. The homepoint can be thought of as a point in space that moves with the fixed coordinate system of the leader machine 102. In an example, and as further described herein, the follower kinematic model can additionally be used to identify the initial alignment position. To illustrate, when using the leader kinematic model alone, the initial alignment position may be any number of lateral positions along a line. The homepoint can be set (such as manually by an operator of the follower machine) to one of the points on the line. On the other hand, when both of the leader kinematic model and the follower kinematic model are used, then the initial alignment position can be a particular point.

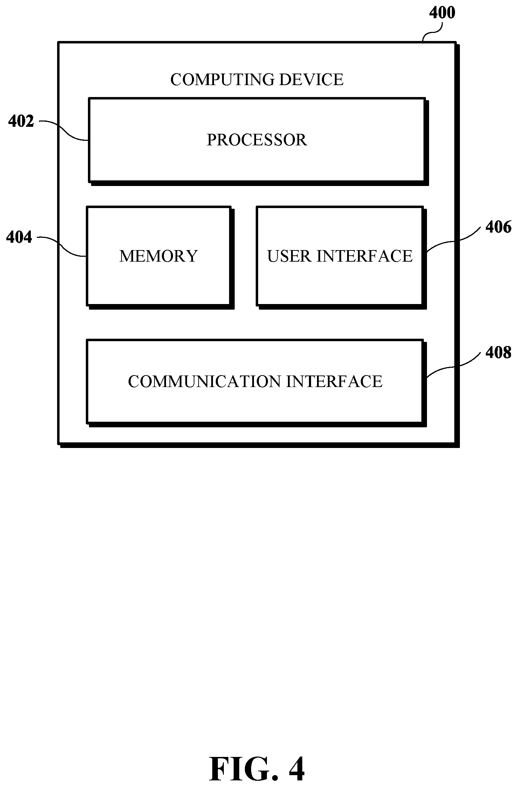

Each of the path planning software 110 and the path planning software 114 can be or include programs, subprograms, functions, routines, subroutines, operations, executable instructions, and/or the like for, *inter alia* and as further described herein, setting homepoints using equipment models and using the set homepoints to align machines, such as a follower machine with an implement, to a specific position based on, for example, a leader machine. A path planning software can be executed by a computing device, such as the computing device 400 described with respect to FIG. 4.

A communication path 116 may be established between the leader machine 102 and the follower machine 104 via which the leader machine 102 may regularly (e.g., at a frequency of 50 Hertz) transmit at least its GPS position to the follower machine 104. The leader machine 102 may also transmit its speed and/or direction to the follower machine 104. The communication path 116 can be established using various technologies, including but not limited to Wireless Fidelity (Wi-Fi) such as a wireless local area network (WLAN), which allows machines to communicate within a certain range and can be effective for short-range communication and can support high data transfer rates; cellular networks (such as utilizing mobile networks (e.g., 4G, 5G)); Bluetooth, which is a short-range wireless technology standard that enables machines to exchange data over short distances; radio frequency, which uses specific radio frequencies for communication; satellite communication, which employs satellite links to transmit data; or Ultrawideband (UWB), which is a wireless communication protocol that uses a wide spectrum of frequencies for short-range, high-bandwidth communications.

As mentioned above, that a homepoint is set for the follower machine 104 based on the leader machine 102 includes that the homepoint is set based on a kinematic model (referred to as a "leader kinematic model") of the leader machine 102 and a kinematic model (referred to as a "follower kinematic model") of the follower machine 104. If an implement 106 is attached to the follower machine 104, then the homepoint may be set based on the leader kinematic model, the follower kinematic model, and the implement kinematic model. For brevity, the implement kinematic model may be considered to be part of the follower kinematic model.

A kinematic model is a mathematical representation of the geometric (and/or motion) characteristics of a machine or implement. A kinematic model may include parameters (e.g., measurements) such as the position, orientation, sizes, and other geometric characteristics of at least some components of the machine or implement. The leader kinematic model and the follower kinematic model enable precise calculation of the homepoint by considering the physical and operational constraints of both of the leader machine 102 and follower machine 104, ensuring accurate synchronization during operations.

An inverse kinematics process can be used to derive (e.g., identify, calculate, or determine) and/or set a follower path plan or a homepoint. Inverse kinematics is a process used to calculate the required joint parameters to place a part of a system, such as the center of the implement 106 (e.g., a grain cart), at a desired position. Inverse kinematics may use a desired position of the implement 106 and the parameters of the system (e.g., the follower kinematic model) to derive the location of the follower machine 104 required to place the implement 106 at a desired position. The inverse kinematic process may rely on iterative optimization to seek out an increasingly accurate approximate solution. Mathematical (kinematic) models to determine the joint configurations needed to achieve the desired end position are used.

The leader kinematic model may be obtained in any number of ways. For example, the leader kinematic model may be retrieved based on an identifier, such as the VIN of the leader machine 102. The leader kinematic model may be obtained by retrieving (e.g., accessing) pre-stored kinematic parameters, such as from a configuration database. In an example, the leader machine 102 can be identified, and its kinematic model obtained based on its proximity to the attachment or the follower machine 104, utilizing sensors or communication signals to establish a connection between the leader machine 102 and the implement 106 or the leader machine 102 and the follower machine 104. In an example, the leader kinematic model may be generated or refined using real-time data from onboard sensors, such as GPS units, cameras, and other positional tracking devices. This data can be processed to determine the specific characteristics of the leader machine 102, such as, for example, turret offset, auger length, and other relevant parameters. As such, in an example, the leader machine 102 may be a combine harvester, and the leader kinematic model may include parameters usable to correlate an auger position to the coordinates of the leader machine 102. As such, the leader kinematic model can include an auger offset location. With respect to some leader kinematic models, the auger offset location can be determined using a turret offset as an intermediate transformation. As such, the leader kinematic model may include a turret offset and an auger length.

The implement kinematic model may be obtained by identifying a specific implement (e.g., a model of grain cart based on a product model number, a serial number, or the like) attached to (e.g., towed by) the follower machine 104 and retrieving its corresponding kinematic parameters from a configuration database. In another example, the implement kinematic model may be dynamically generated using data from sensors connected to the implement 106, such as length, width, and attachment point measurements. The implement kinematic model may include parameters such as the drawbar location, attachment dimensions (e.g., a length, width, height, depth, and the like of the grain cart), an offset to the follower machine 104, an offset to the leader machine 102, and the like. In an example, the implement kinematic model may be generated based on real-time sensor data, including GPS coordinates and positional data from the sensors. In another example, an operator may manually input or adjust parameters of the implement kinematic model through one or more user interfaces.

The follower kinematic model may be obtained in any number of ways. In an example, the follower machine 104 may be identified, such as based on an identifier (e.g., a VIN). Once identified, a pre-stored follower kinematic model can be retrieved, such as from a configuration database. In an example, the follower kinematic model may be generated based on real-time sensor data, including GPS coordinates and positional data from onboard sensors. In an example, an operator may manually input or adjust parameters of the follower kinematic model through one or more user interfaces.

In an example, the kinematic model for a machine may be retrieved from a remote configuration system 118 that includes or has access to configuration data, where each machine's specific parameters are stored. The kinematic model associated with a machine or implement can be stored in any suitable format or data structure. In an example, the kinematic model can be stored as key-value pairs, where the keys are parameter names, and the values are the corresponding parameter values. In an example, the configuration data can be implemented as a lookup table that receives a machine or implement identifier and outputs the corresponding kinematic model.

In another example, the path planning software (e.g., the path planning software 110 or the path planning software 114) may provide user interfaces that enable an operator to manually enter parameters of a kinematic model, allowing for customization based on real-time conditions or unique machine configurations. In an example, a machine can be configured to include its own kinematic model, which another machine can obtain directly by transmitting a request for the kinematic model via machine-to-machine communication. Moreover, kinematic models can also be dynamically generated using real-time sensor data from the machine, inertial measurement units (IMUs), and other onboard sensors (e.g., removable sensors).

In an example, removable sensors may be temporarily attached at different defined locations of a machine or implement, allowing the path planning software to obtain measurements (parameters) for the kinematic model based on the locations of the sensors. These sensors can include accelerometers, gyroscopes, ultrasonic sensors, or other types of positional and motion detection devices. The data collected from these removable sensors can be used to accurately map the geometric and kinematic characteristics of the machine, which is then stored for later retrieval. For example, a sensor attached to the tip of an unloading auger can provide precise positional data that is used to update (or set) the kinematic model of the leader machine 102. Similarly, sensors placed at various points along a grain cart can help determine its dimensions and alignment relative to the tractor. In an example, the path planning software may identify a list of sensors currently attached to the machine and guide the operator to associate each identified sensor with a specific component, location, or measurement on the machine or implement.

Setting the homepoint can be triggered by various conditions and actions. Setting the homepoint may be triggered when the follower machine 104 enters an operational zone of the leader machine 102, as detected by the GPS units or other positional sensors. The "operational zone" of the leader machine 102 can be a designated area (e.g., a geo fence) around the leader machine 102 where the follower machine 104 can effectively synchronize its movements and operations. The operational zone may be, for example, an area proximate to a side (e.g., a left side or a right side) of the leader machine 102. The operational zone may be defined based on the positional data of the leader machine 102. The operational zone may be defined based on historical data associated with the leader machine 102 or the follower machine 104. When the follower machine 104 enters the operational zone, the follower machine 104 can be guided to align itself with the leader machine 102 to perform synchronized operations. For example, in the context of a combine harvester (e.g., the leader machine 102) and a tractor (e.g., the follower machine 104) towing a grain cart (e.g., the implement 106), the operational zone can be the area to the side of the combine harvester where the tractor can position the grain cart to receive the grain from the combine harvester's unloading auger. The path planning software 114 can be configured to ensure that once the tractor and grain cart enter this operational zone, they can be guided to the precise homepoint for efficient and accurate unloading.

In another example, the homepoint can be set when the operator of the tractor invokes a user interface control of the path planning software 114. The homepoint may be set based on the combine harvester, signaling that the tractor is to be aligned with the combine harvester, or may be set without a combine harvester involved, signaling that the operator desires the tractor to place the implement at a specific position. In another example, the path planning software 114 may trigger the setting of the homepoint automatically based on predefined operational criteria, such as the proximity of the tractor to the combine harvester or the detection of specific operational states (e.g., unloading mode).

In an example, the implement path plan and the follower path plan can be identified after the homepoint is set. In another example, the implement path plan and the follower path pan can be identified before the homepoint is set. In some implementations, the operational parameter may be determined or used to set the implement path plan. To set the implement path plan, the path planning software 114 may first obtain the leader path plan. The leader path plan may be obtained from the leader machine 102 (such as from the path planning software 110), from the remote configuration system 118, or from any other source that may include the leader path plan.

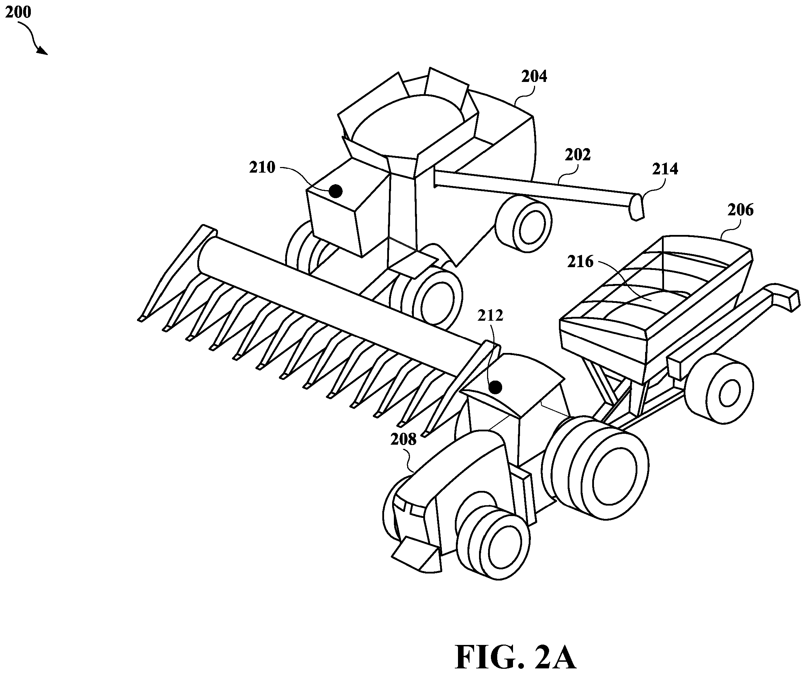

FIG. 2A illustrates an example 200 of using kinematic models to place an auger 202 of a combine 204 into the center of a grain cart 206 attached to a tractor 208. The combine 204 can be the leader machine 102 of FIG. 1 and the tractor 208 can be the follower machine 104 of FIG. 1. As such, the combine 204 includes a GPS unit 210 and the tractor 208 includes a GPS unit 212. The GPS unit 210 is located at an (X, Y) position within a coordinate system defined with respect to the combine 204, where the origin of the coordinate system is a defined point of the combine 204 (e.g., the center of a drive axle of the combine 204). Similarly, the GPS unit 212 is located at an (X, Y) position within a coordinate system defined with respect to the tractor 208, where the origin of the coordinate system is a defined point of the tractor 208 (e.g., the center of the rear axle of the tractor 208).

Depending on the machine, several dimensions may have to be combined to set the homepoint. As further described herein, several dimensions associated with the combine 204 are combined and several dimensions of the follower-implement combination (e.g., the combination of the tractor 208 and the grain cart 206) are combined to place the auger 202, and more specifically a spout 214 of the auger 202, in the middle (e.g., over a middle point 216) of the grain cart 206. The homepoint may be set based on the unloading position (e.g., location) of the combine 204 (e.g., the leader) relative to the position of the GPS unit 210 of the combine 204, and the unloading position of the grain cart 206 relative to the position of the GPS unit 212 of the tractor 208 (e.g., the follower). For example, to find the leader unloading position, the follower is configured with the position of the unloading auger (or spout) relative to the GPS unit 212 in (X, Y) coordinates.

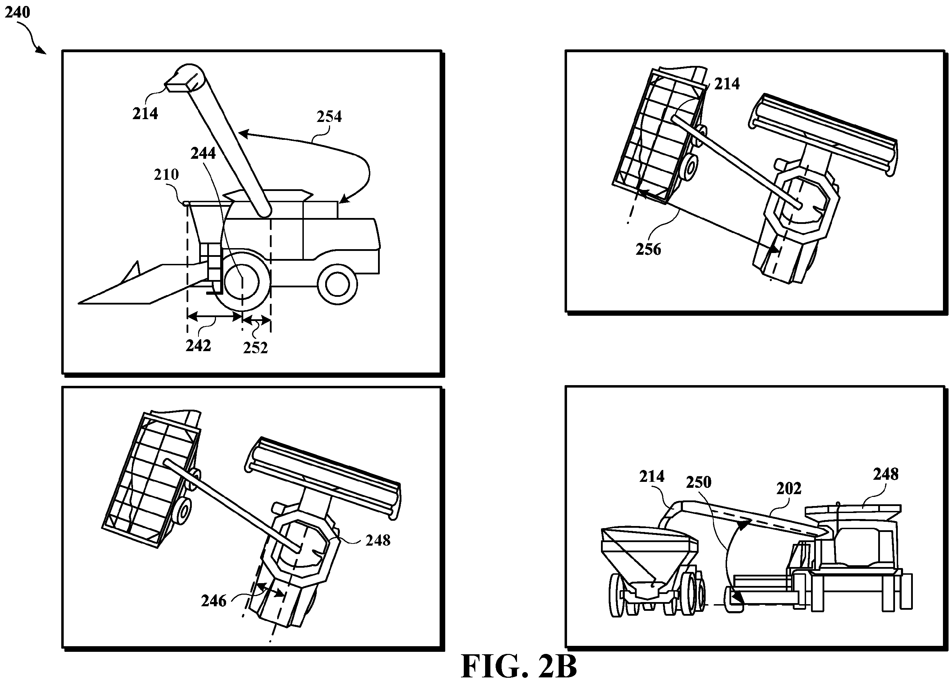

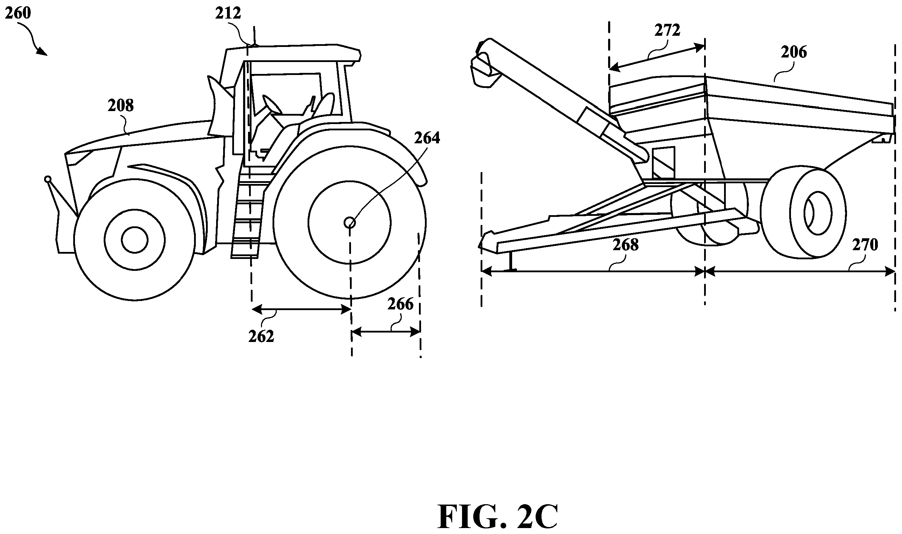

Again, given the combination of the machines shown in FIG. 2, the homepoint is set based on an alignment of the spout 214 over the middle point 216. However, with other types of leader and/or follower machines, different alignments or geometric constraints may need to be met (e.g., set, configured, or determined) to set a homepoint.

FIG. 2B illustrates parameters 240 of the leader kinematic model (e.g., the combine 204 of FIG. 2A). The parameters 240 are used to identify a location of the spout 214 with respect to the GPS unit 210. A parameter 242 indicates the (X, Y) location of the GPS unit 210 relative to the origin 244 of the combine 204. That is, the parameter 242 indicates the inline position and the lateral position of the GPS unit 210. A parameter 256 indicates the length (e.g., the endpoint) of the auger 202, which can be the distance from the center of the combine 204 to the tip (e.g., the spout 214) of the auger. A parameter 246 indicates the lateral offset of a turret 248 of the combine 204. A parameter 250 indicates the pitch of the auger 202.

A parameter 252 indicates the inline offset of the auger 202. A parameter 254 indicates the full swing angle of the auger 202, if the auger swings at all. The full swing of the auger can be utilized with respect to machines, such as on combines, that do not include positional sensors capable of indicating the auger's angle. Consequently, it may only be possible to ascertain whether the auger is at 100% or 0% swing based on, for example, a timer from a hydraulic solenoid. Trigonometric functions can be employed to determine the position where the crop is discharged, based on the auger length and the angle (e.g., hypotenuse*cos[full swing angle] = Y offset in leader fixed coordinate, and hypotenuse*sin[full swing angle] = Y offset in leader fixed coordinate, wherein hypotenuse is the auger length). In some configurations that include a position sensor, the landing point of the crop can be calculated based on auger swing in real time (e.g., based on data from the positional sensor).

The leader kinematic model of the combine 204 may additionally include data (e.g., a flag) indicating whether the auger 202 is folding or not; and data indicating a fold status of the auger 202 (e.g., whether the auger 202 is extended or retracted). A person skilled in the art understands and can derive the transformations necessary, such as based on inverse kinematics, to place the spout 214 of the auger 202 relative to the GPS unit 210 based on the parameters 240.

At least some of these parameters may be associated with the combine 204 and may not be changeable. For example, any parameters related to the turret 248 may be fixed based on an identifier (VIN) of the combine 204. However, the auger may be changeable. As such, a path planning software associated with one of the combine 204 or the tractor 208 may enable an operator to set parameters associated with the specific auger used. For example, the path planning software may enable the operator to input or adjust parameters such as the length and angle of extensions or retractions of the auger, which might change based on the specific operational requirements or equipment modifications.

It is noted that the parameter 250 (the auger pitch) is not necessary for setting the homepoint. However, the parameter 250 can be useful for other applications, such as an application that requires the placement of a camera at the spout 214. The parameter 250 can be used to indicate the necessary pitch of the camera. The pitch of the auger can be used to find (e.g., calculate, identify, determine, etc.) the position of the camera relative to a reference coordinate system on the leader machine. Inverse kinematics are then used to determine the orientation of the camera (camera coordinate system) to transform reference frames, allowing the images to be related back to the coordinate system of the combine. The camera (e.g., images obtained thereby) may be used in automatically positioning the auger 202 over the grain cart 206 to ensure efficient unloading of the harvested grain. The camera can be calibrated by marking the positions over the front and back of the grain cart 206, so that the edges and center of the grain cart 206 can be detected. During the unloading process, real-time images from the camera enable the path planning software to make necessary adjustments to the position (e.g., swing) of the auger 202, ensuring accurate and even distribution of the grain in the grain cart 206. This information can be used to fill the cart evenly by moving the tractor via the machine sync application. Moving the tractor via the machine sync application includes making a real-time adjustment to the homepoint via user interfaces of the machine sync application.

FIG. 2C illustrates parameters 260 of the follower kinematic model (e.g., the tractor 208 of FIG. 2A) and the implement kinematic model (e.g., the grain cart 206 of FIG. 2A). Parameters 260 are used to identify a location of the middle of the grain cart 206 with respect to the GPS unit 212 of the tractor 208. A parameter 262 indicates the (X, Y) location of the GPS unit 212 relative to the origin 264 of the tractor 208. A parameter 266 indicates a location of a drawbar pin hole, to which the grain cart 206 may be hitched. A parameter 268 indicates a tongue length. A parameter 270 indicates the length of the grain cart 206. A parameter 272 indicates the width of the grain cart 206. Based on these parameters, the location of the center of the grain cart 206 can be determined.

In some implementations or configurations, the width of the cart (e.g., the parameter 272) may not be required. To illustrate, an assumption can be made that the unloading will always target the center of the grain cart 206, and that all drawbars are centrally positioned on the cart, making the centerline of the tractor 208 sufficient for this purpose. However, when these assumptions do not hold true, a more complex kinematic model incorporating the width of the grain cart 206 may be necessary.

At least some of these parameters may be associated with the tractor 208 and may not be changeable. For example, any parameters related to the location of the GPS unit 212 and the drawbar pin hole may be fixed based on an identifier (VIN) of the tractor 208. However, the cart may be changeable. As such, a path planning software associated with one of the combine 204 or the tractor 208 may enable an operator to set parameters associated with the cart used. For example, the path planning software may enable the operator to input or adjust parameters such as the length of the grain cart and tongue (if any). In an example, the path planning software may enable the operator to enter or select an equipment model for one or more carts attached to the tractor 208.

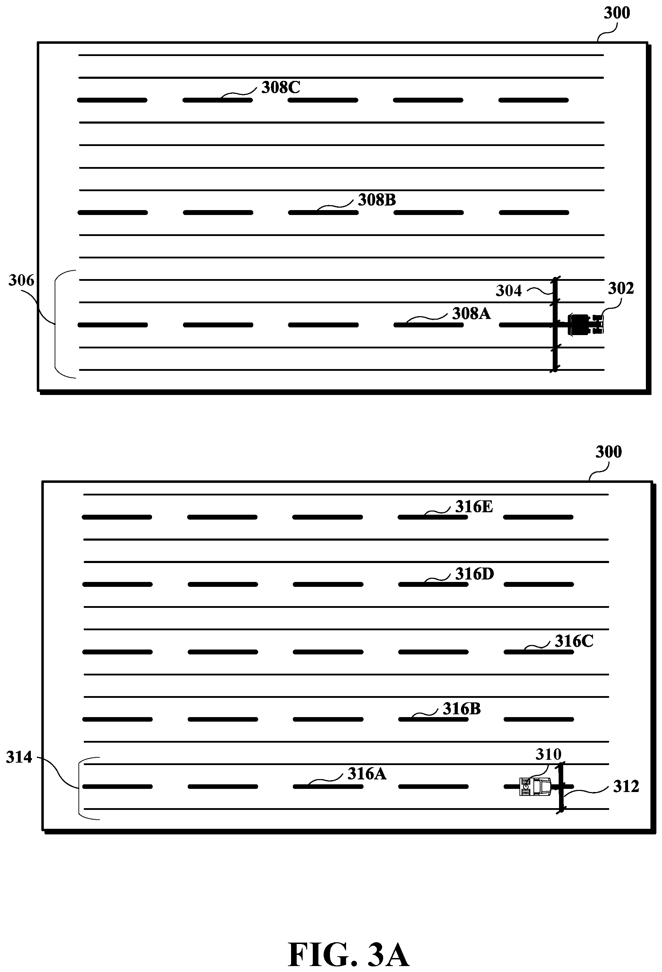

FIG. 3A illustrates identifying of a path plan for a subsequent machine. A subsequent machine is one that performs operations in a field following a previous (e.g., initial) farming operation by a previous machine. The path plan is generated based on the traversal of the field by the previous machine. As mentioned, a path plan includes a set of guidance lines that direct the subsequent machine's movement across the field, ensuring precise and efficient execution of its tasks. These guidance lines are derived from the recorded movements of the previous machine, ensuring that the subsequent machine operates efficiently and precisely within the same spatial parameters. By basing the path plan on the previous machine's traversal, field operations are optimized, reducing overlap and gaps.

Managing guidance lines throughout the crop year from strip till to harvest is a complex task. The difficulty of maintaining pre-plant fertilizer strips, avoiding crop rows while spraying, and accurately counting guest rows at harvest are well-known challenges in agriculture. Automatically creating guidance lines can optimize field operations across different phases of farming. Guidance lines can be generated using crop row maps created during a previous (e.g., first) pass through the field, whether it is strip tilling or planting. For example, farmers need only place an implement receiver on their planter or strip-till rig during the first pass to map the necessary data. Subsequently, path planning software, such as the path planning software 110 of FIG. 1, automatically generates guidance lines for subsequent passes, such as planting, spraying, or harvesting, regardless of equipment width. In an example, the path plan may be generated by a remote system, such as the remote configuration system 118 of FIG. 1 and received by the path planning software. In such a case, the path plan is said to be generated offboard (i.e., not at the leader machine 102 itself). This automation ensures that each pass begins quickly and confidently, enhancing the efficiency of farming operations by maintaining established guidance lines and reducing the risk of partial width passes. By generating guidance lines, yield potential can be protected by accurately planting rows to optimize nutrient investment and minimizing soil disturbance, while keeping machine tires between rows to prevent crop damage throughout the growing season.

A portion 300 of a field is first traversed by a first machine 302 to which an implement 304 that can process 5 rows (such as rows 306) is attached. Data (i.e., traversal data) associated with the traversal of the portion 300 by the first machine 302 is recorded. For example, locations and lengths of the traversal lines 308A-308C traversed by the first machine 302. Details of the implement 304 may also be included in the traversal data. The traversal data can be transmitted to a configuration system, such as the configuration system 118 of FIG. 1.

Subsequently (e.g., later during the season), the portion 300 is traversed by a second machine 310 to which an implement 312 that can process 3 rows (such as rows 314) is attached. As such, a path plan that includes guidance lines 316A-316E can be automatically generated for the second machine 310. In an example, the path plan can be generated by the configuration system and transmitted to the second machine 310 (e.g., to a path planning software therein). In another example, the path plan can be generated by the path planning software of the second machine 310 based on the traversal data received from the configuration system.

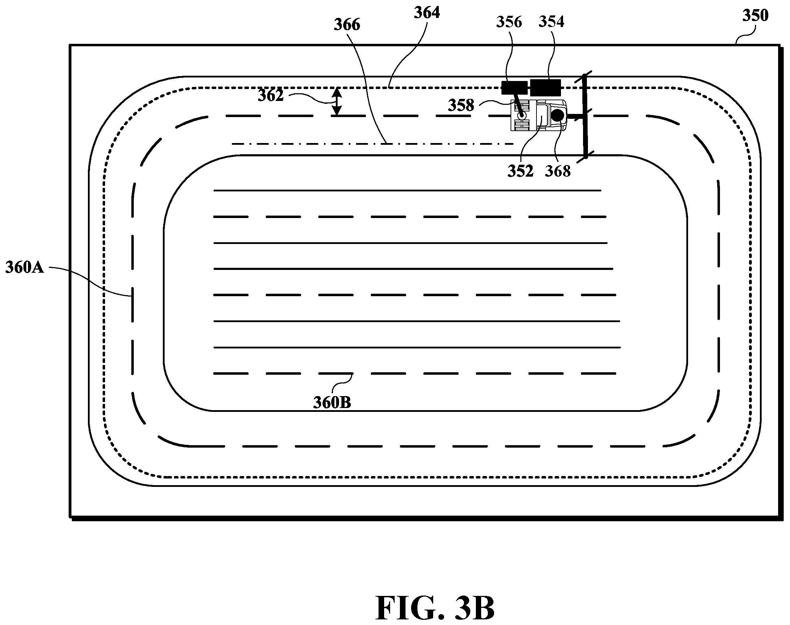

FIG. 3B illustrates generating a follower path plan based on a leader path plan. Generating the follower path plan based on the leader path plan may include first generating an implement path plan based on (e.g., at a constant offset from) the leader path plan and then deriving (e.g., using inverse kinematics) the follower path plan from the implement path plan. FIG. 3B illustrates a portion 350 of a field that is being, for example, harvested by a leader machine 352 (which may be a combine harvester). A follower machine 354 (e.g., a tractor) that may include (e.g., tow) an implement 356 (e.g., a grain cart) receives crop from the leader machine 352 via an auger 358 of the leader machine 352. The identified leader path plan of the leader machine 352 includes guidance lines shown in dark, dashed lines, such as guidance lines 360A and 360B.

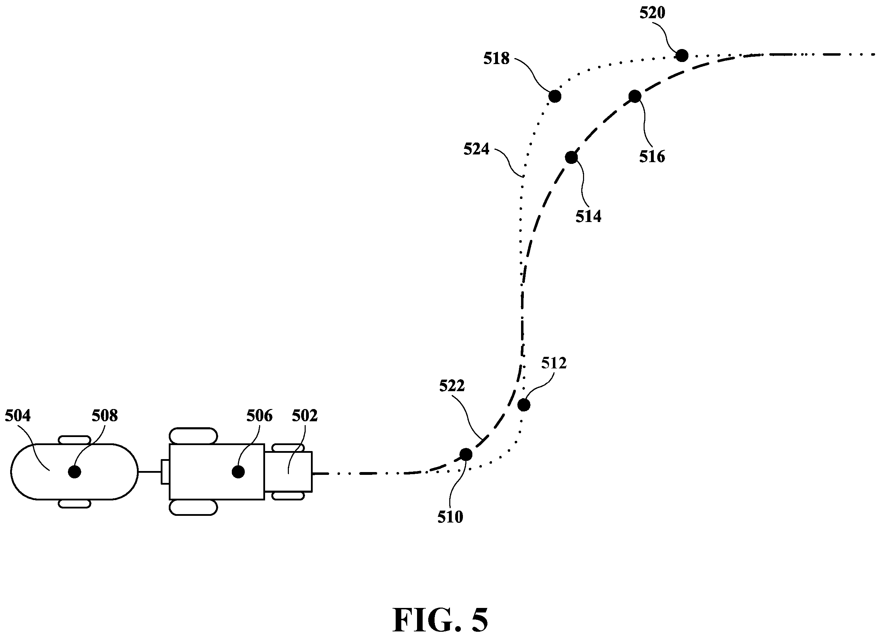

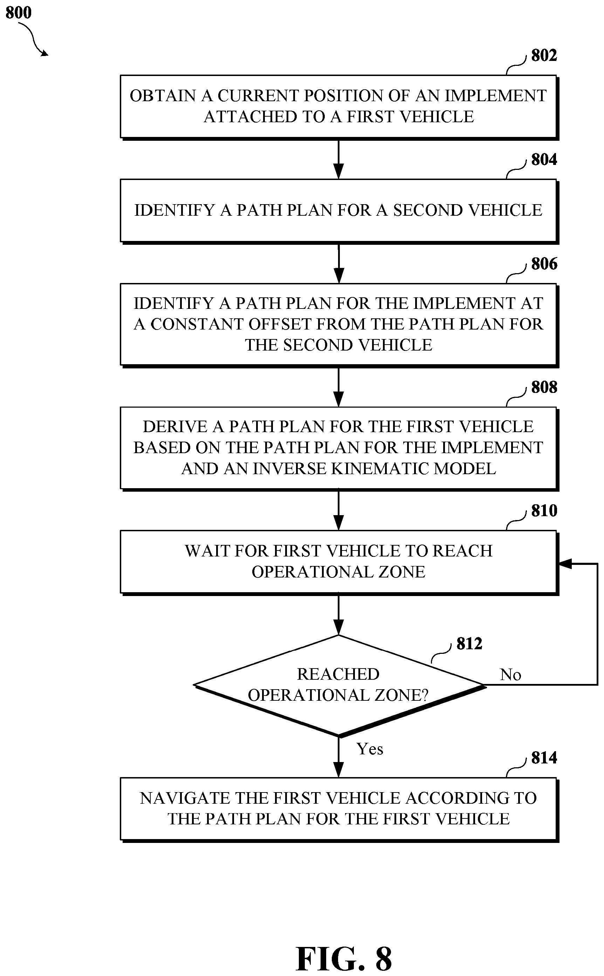

The implement path plan for the implement 356 can be identified based on the leader path plan and kinematic models (e.g., one or more of the leader kinematic model, the follower kinematic model, or the implement kinematic model). As mentioned above, an operational parameter may be used to identify the implement path plan (e.g., to determine an offset from the leader path plan). The implement path plan can then mirror the leader path plan but is offset by the lateral offset 362. The follower path plan may be derived from the implement path plan such that operating the follower machine according to the follower path plan will maintain the implement 356 along the implement path plan. For simplicity in FIG. 3B, both the implement path plan and the follower path plan are represented by a guidance line 364, but the implement path plan and the follower path plan do not always overlap, as will be described with respect to FIGS. 5 and 8.

The follower path plan may depend on which side of the leader machine 352 the follower machine 354 is placed, the direction of travel of the leader machine 352, or the direction in which the auger 358 extends. To illustrate, as shown in FIG. 3B, the leader machine 352 is traveling (e.g., harvesting) in an Eastward direction and, given that the auger 358 extends Northward from the leader machine 352, then the guidance line 364 is identified to be on the left side of the leader machine 352; on the other hand, if leader machine 352 were traveling in the opposite direction (e.g., is turned 180 degrees), then the follower path plan would instead include a guidance line 366, which is partially shown. In some implementations, the follower path plan may include both of the guidance lines 364 and 366. The guidance lines of the follower path plan keep the follower machine 354 aligned with the leader machine 352. As such, a more accurate and automated way for the follower machine 354 and the implement 356 (e.g., a grain cart) to maintain a position with respect to the leader machine 352 (e.g., a combine) is provided, reducing manual adjustments and improving performance in various field conditions. The follower machine 354 can use the GPS data and the identified guidance lines to steer itself and keep the implement 356 positioned accurately during movement of the leader machine 352.

Identifying the implement path plan or deriving the follower path plan may include setting a homepoint 368. The homepoint 368 can be useful when the system (e.g. the leader machine 352 and the follower machine 354) is to perform certain maneuvers, such as curving or any maneuver around obstacles. For example, the follower machine 354 may continuously aim to position the implement 356 with respect to the homepoint 368. The follower machine 354 may position the implement by adjusting speed and direction of the follower machine 354. In another example, the follower machine 354 may continuously aim to position the follower machine 354 (i.e., itself) with respect to the homepoint 368 to position the implement with respect to the homepoint 368 or the leader machine 352, or to maintain the implement 356 along the implement path plan. Using the homepoint 368 may ensure smooth and accurate following while maintaining the position of the implement 356 along the implement path plan.

To illustrate, because the leader machine 352 and the follower machine 354 may have different turning radii, the follower machine 354 or the implement 356 may end up contacting a portion of the leader machine 352 while performing maneuvers (e.g., turning). By following the follower path plan (i.e., maintaining the implement 356 along the implement path plan) while maintaining the distance to the homepoint 368, the follower machine 354 may maneuver (e.g., navigate curves) with significantly better performance, maintaining alignment of the implement 356 with the leader machine 352 without contacting the leader machine 352. Said another way, the follower machine 354 may operate by following the follower path plan derived from the implement 356 targeting the homepoint 368 along the implement path plan, which may be determined based on the length of the auger 358 of the leader machine 352 and lateral offset 362 accordingly.

FIG. 4 is an example of a computing device 400. The computing device 400 is shown as including a processor 402, a memory 404, a user interface 406, and a communication interface 408. The computing device may be implemented by a machine, such as the leader machine 102 and/or the follower machine 104 of FIG. 1. The computing device 400 may facilitate communication between the machine and other computing devices, which may be remote from the machine. The computing device 400 can execute instructions such as those of a path planning software.

The processor 402 may be a microprocessor, and may include a single processor or multiple processors. A processor may have a single processing core or multiple processing cores. The processor 402 may be or include other types of devices, or multiple devices, now existing or hereafter developed, configured for manipulating or processing information. The computing device 400 may include multiple processors interconnected in one or more manners, including but not limited to, hardwired or networked (e.g., wirelessly networked). By way of example, the operations of the processor 402 may be distributed across multiple devices or units that may be coupled directly or via a local area or other suitable network. The processor 402 may also include a cache or cache memory for local storage of operating data or instructions associated with the evaluation.

The memory 404 may include one or more memory components, which may each be volatile memory or non-volatile memory. For example, the volatile memory of the memory 404 may be random access memory (RAM) (e.g., a DRAM module, such as DDR SDRAM) or another form of volatile memory. In another example, the non-volatile memory of the memory 404 may be a disk drive, a solid-state drive, flash memory, phase-change memory, or another form of non-volatile memory configured for persistent electronic information storage. The memory 404 may also include other types of devices, now existing or hereafter developed, configured for storing data or instructions for processing by the processor 402.

The memory 404 can include data for immediate access by the computing device 400. For example, the memory 404 may include executable instructions, application data, an operating system, or a combination thereof accessible by the processor 402. The executable instructions, the application data, the operating system, or a combination thereof may be loaded or copied, in whole or in part, from non-volatile memory to volatile memory to be executed by the computing device 400. For example, the executable instructions and application data may include instructions and data for, as described herein, machine synchronization; kinematic model calculations, selections, or configurations; homepoint setting; path plan identification; and machine control (e.g., autonomous control).

The memory 404 may include executable instructions or application data associated with a communication interface 408. The communication interface 408 may be or may include a transmitter and/or a receiver. The communication interface 408 may facilitate communication between, for example, leader and follower machines. For example, the communication interface 408 may enable data exchange over a communication path allowing for real-time synchronization and data updates between the machines.

The user interface 406 may include one or more input interfaces and/or output interfaces. An input interface may be, for example, a positional input device, such as a mouse, touchpad, touchscreen, or the like; a keyboard; or another suitable human or machine interface device. An output interface may be, for example, a display, such as a liquid crystal display, a cathode-ray tube, a light emitting diode display, or other suitable display. As such, an operator may interact with a path planning software, select or configure machines and implements, view real-time positional data, and monitor the status of machine synchronization through the user interface 406. Additionally, the user interface 406 may provide visual indicators and alerts to assist the operator in maintaining optimal machine operation and synchronization.

The computing device 400 may include additional components. For example, the computing device 400 may include power management units, various sensors for monitoring environmental conditions and machine status, and interfaces for connecting to external storage devices or other peripherals. These components ensure that the computing device 400 operates reliably in various agricultural environments and can handle the processing and communication demands of the machine sync system.

FIG. 5 illustrates placing an implement 504 (e.g., a grain cart) at a next (e.g., desired) position. For example, the next position of the implement 504 may place the implement in a position to receive material (e.g., receive grain into the grain cart). FIG. 5 includes a vehicle 502 (e.g., a first vehicle or a tractor) towing the implement 504. The vehicle 502 may be, for example, a follower machine. FIG. 5 illustrates a scenario where a leader machine is not necessary for generating an implement path plan or a follower path plan. Rather, the implement path plan may be known or generated a priori and the vehicle 502 may position the implement 504 according to the implement path plan using, for example, inverse kinematics. The vehicle 502 may include a GPS unit, such as the GPS unit 112, and a path planning software, such as the path planning software 114. In certain configuration, the implement 504 may also include a GPS unit and/or a path planning software.

The vehicle 502 may contain a first point 506. That is, the first point 506 may be defined (e.g., set) with respect to the vehicle 502. The first point 506 may be a homepoint. The first point 506 may be located in a center of the vehicle 502 or may be located at another place within the vehicle 502. The first point 506 may be used to represent a position of the vehicle 502 within a coordinate system. The first point 506 may be used to obtain a current position (e.g., GPS position, offset position, position along a path) of the vehicle 502.

The implement 504 may contain a second point 508. The second point 508 may be a homepoint. The second point 508 may be located in a center of the implement 504 or may be located at another place within the implement 504. The second point 508 may be used to represent a position of the implement 504 within a coordinate system. The second point 508 may be used to obtain a current position (e.g., GPS position, offset position, position along a path) of the implement 504.

The vehicle 502 may be used to position the implement 504. A current position of the implement 504 may be known, for example, using the second point 508. A next (e.g., desired) position of the implement 504 (e.g., the second point 508) may be determined. The implement 504 may be placed at the next position at a future time (e.g., a next time step). The next position may be a first next position 510 shown in FIG. 5. For example, the implement 504 may be located at the current position (e.g., the second point 508) at a time t, and the implement 504 may be located at the first next position 510 at a time t+1.

A desired position of the vehicle 502 may be determined (e.g., derived, calculated) from the next position of the implement 504. The desired position may be determined such that when the vehicle 502 is at the desired position, the implement 504 is at the next position. For example, when the vehicle 502 is located at the first desired position 512, the implement 504 is located at the first next position 510. The desired position of the vehicle 502 may be determined using, for example, inverse kinematics. Inverse kinematics may use, for example, one or more of the next positions of the implement 504, a kinematic model of the vehicle 502 (e.g., the follower kinematic model), a kinematic model of the implement 504 (e.g., the implement kinematic model), a combined kinematic model of the vehicle 502 and the implement 504, the first point 506, or the second point 508 to determine the desired position of the vehicle 502.

In some implementations, a series of next (e.g., desired) positions of the implement 504 are determined. The implement 504 may be placed at each next position in the series of next positions at a respective future time step. The series of next positions may include the first next position 510, a second next position 514, and a third next position 516. For example, the implement 504 may be located at the current position (e.g., the second point 508) at a time t, at the first next position 510 at a time t+1, at the second next position 514 at a time t+2, and at the third next position 516 at a time t+3.

The series of next positions for the implement 504 may be used to derive a series of desired positions for the vehicle 502. The vehicle 502 may be navigated to each desired position in the series of desired positions at a future time. The series of desired positions may include the first desired position 512, a second desired position 518, and a third desired position 520. For example, the vehicle 502 may be located at the current position (e.g., the first point 506) at a time t, at the first desired position 512 at a time t+1, at the second desired position 518 at a time t+2, and at the third desired position 520 at a time t+3. The series of desired positions may be determined such that when the vehicle 502 is at each desired position of the series of desired positions, the implement 504 is at each next position of the series of next positions. That is, at the time t+1, the vehicle 502 may be located at the first desired position 512 and the implement 504 may be located at the first next position 510. At the time t+2, the vehicle 502 may be located at the second desired position 518 and the implement 504 may be located at the second next position 514. At the time t+3, the vehicle 502 may be located at the third desired position 520 and the implement 504 may be located at the third next position 516.

The series of next positions of the implement may be represented as a path, for example, an implement path plan 522. The implement path plan 522 may be used to determine (e.g., derive, calculate) a vehicle path plan 524 (e.g., the series of desired positions) for the vehicle 502. The vehicle path plan 524 may be determined such that operating (e.g., navigating) the vehicle 502 according to the vehicle path plan 524 will maintain the implement 504 along the implement path plan 522. That is, because the implement 504 is connected to (e.g., towed by) the vehicle 502, the vehicle 502 is responsible for maintaining the implement 504 along the implement path plan 522. The vehicle path plan 524 may be determined using, for example, inverse kinematics. Inverse kinematics may use, for example, one or more of the implement path plan 522, a kinematic model of the vehicle 502 (e.g., the follower kinematic model), a kinematic model of the implement 504 (e.g., the implement kinematic model), a combined kinematic model of the vehicle 502 and the implement 504, the first point 506, or the second point 508 to determine the vehicle path plan 524.

Deriving the desired position of the vehicle 502 or the vehicle path plan 524 may use inverse kinematics, that is, forward kinematics performed in reverse. For example, the implement path plan 522 could be calculated from a known vehicle path plan 524 using forward kinematics. Forward kinematics may calculate a position of the implement 504 based on a location of the vehicle 502 and parameters of the system (e.g., kinematic models, a connection between the vehicle 502 and the implement 504, points of rotation, wheel locations, geometric parameters, and the like). Alternatively, as described herein, this forward kinematics process may be performed in reverse (e.g., deriving the vehicle path plan 524 from the implement path plan 522) using inverse kinematics. Inverse kinematics may use a desired position of the implement 504 and the parameters of the system to derive the location of the vehicle 502 required to place the implement 504 at the next (e.g., desired) position. Repeating this process for a series of next positions along the implement path plan 522 can generate a corresponding vehicle path plan 524 that maintains the implement 504 along the implement path plan 522 (e.g., the series of next positions). The inverse kinematic process may rely on iterative optimization to seek out an increasingly accurate approximate solution. Alternatively, the desired position of the vehicle 502 (e.g., the vehicle path plan 524) may be derived from the next position of the implement 504 (e.g., the implement path plan 522) using methods other than inverse kinematics, for example, machine learning techniques, feedback loops, numerical optimization, or the like, or other methods hereafter developed. In another example, the desired position of the vehicle 502 (e.g., the vehicle path plan 524) may be derived using geometric techniques based on information from sensors or assumptions.

The vehicle 502 may be configured to follow (e.g., autonomously) the vehicle path plan 524. Path planning software of the vehicle 502 may be used to obtain (e.g., identify, select, or receive) the vehicle path plan 524. In some implementations, the path planning software of the vehicle 502 may be used to obtain the implement path plan 522 for the implement 504. The vehicle 502 may include an autonomous navigation system to adjust its position based on one or more of the vehicle path plan 524, the first point 506, the second point 508, or a homepoint.

The implement 504 may be configured to follow an implement path plan 522, that is, the implement 504 may follow (e.g., be towed upon or maintain a position along) the implement path plan 522 as the vehicle 502 follows the vehicle path plan 524. The path planning software of the implement 504 may be used to obtain (e.g., identify, select, or receive) the implement path plan 522. In some implementations, the path planning software of the implement 504 can be used to obtain the vehicle path plan 524 for the vehicle 502. The implement 504 may include a navigation system and a communication system to communicate to the vehicle 502 to adjust the position of the implement 504 based on one or more of the implement path plan 522, the first point 506, the second point 508, or a homepoint.

During straight portions of the implement path plan 522, the vehicle path plan 524 may be configured to overlap with the implement path plan 522. During curved portions of the implement path plan 522, the vehicle path plan 524 may be configured to follow a longer path around the curve (e.g., a wider path or a curve with a larger radius) to maintain the implement 504 along the implement path plan 522.

FIG. 6 is a flowchart of an example of a technique 600 for navigating a vehicle (e.g., the vehicle 502 of FIG. 5) to a desired position of the vehicle based on a next position of an implement (e.g., the implement 504). The technique 600 can be executed using computing devices, such as the systems, hardware, and software described with respect to FIGS. 1-4. The technique 600 can be performed, for example, by executing a machine-readable program or other computer-executable instructions, such as routines, instructions, programs, or other code. The steps, or operations, of the technique 600, or another technique, method, process, or algorithm described in connection with the implementations disclosed herein can be implemented directly in hardware, firmware, software executed by hardware, circuitry, or a combination thereof. The technique 600 can be executed by a path planning software, such as the path planning software 110 or the path planning software 114 of FIG. 1.

For simplicity of explanation, the technique 600 is depicted and described herein as a respective series of steps or operations. However, the steps or operations of the technique 600 in accordance with this disclosure can occur in various orders and/or concurrently. Additionally, other steps or operations not presented and described herein may be used. Furthermore, not all illustrated steps or operations may be required to implement a technique in accordance with the disclosed subject matter.

At 602, a current position of the implement attached to the vehicle is obtained. The current position may be represented by a center of the implement, for example, the second point 508 of FIG. 5. The current position may be a GPS position, an offset position relative to the vehicle, a position along a path, or the like. The implement may include a GPS unit or sensers to obtain the current position. In some implementations, the vehicle obtains the current position of the implement. For example, the vehicle may include sensors configured to detect the current position of the implement. Obtaining the current position of the implement may include setting a homepoint at the current position of the implement. For example, the homepoint may be set at the second point 508 of FIG. 5. The homepoint may be set relative to another machine such that movement of the other machine is reflected as movement of the homepoint.

At 604, a next (e.g., desired) position of the implement is identified. The next position may be determined as a position that will place the implement at a specific point, for example, to receive material into the implement. The next position of the implement may be identified in real time based on a position of another machine. The next position may be a series of next positions. The series of next positions may form a path, for example, the implement path plan 522 of FIG. 5. Identifying the next position of the implement may include detecting movement of the homepoint to a new location and setting the next position of the implement to the new location.

At 606, a desired position of the vehicle is derived based on the next position of the implement. The desired position of the vehicle may be determined such that when the vehicle is at the desired position, the implement is at the next position. The desired position may be a series of desired positions. The series of desired positions may form a path, for example, the vehicle path plan 524 of FIG. 5. The desired position of the vehicle may be derived using an inverse kinematic model (e.g., inverse kinematics).

At 608, the vehicle is navigated to the desired position of the vehicle. Navigating the vehicle to the desired position may also navigate the implement to the next position. Where the desired position of the vehicle is a series of desired positions (e.g., a vehicle path plan, for example, the vehicle path plan 524 of FIG. 5), navigating the vehicle to the desired position may include navigating the vehicle along the series of desired positions (e.g., according to the vehicle path plan). Where the desired position of the vehicle is a series of desired positions (e.g., a vehicle path plan) and the next position of the implement is a series of next positions (e.g., an implement path plan), navigating the vehicle along the series of desired positions may maintain the implement along the series of next positions (e.g., cause the implement to follow the implement path plan).

The technique 600 may be repeated. For example, after the vehicle is navigated to the desired position of the vehicle at 608, the process may return to 602 and obtain the current position of the implement. As described, navigating the vehicle to the desired position may also navigate the implement to the next position. Accordingly, the next position of the implement identified during a first iteration of the technique 600 may be set as the current position of the implement during a second iteration of the technique 600, and a new next position of the implement may be identified.

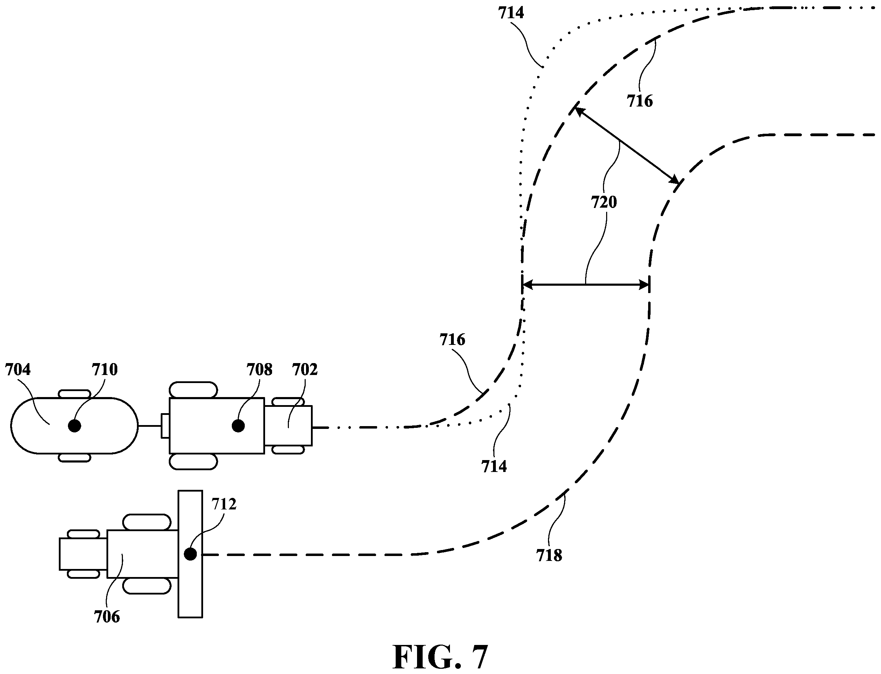

Referring to FIGS. 7, 8, and 9, deriving a follower path plan from an implement path plan, where the implement path plan is based on a leader path plan, is described. In some implementations, a leader path plan may not be known *a priori.* As such, a desired position of a follower machine may be determined based on a next position of an implement, which is in turn based on a position of a leader machine. FIG. 7 illustrates a follower machine 702 (e.g., a first vehicle, a tractor) towing an implement 704 (e.g., a grain cart) and a leader machine 706 (e.g., a second vehicle, a combine harvester).

The follower machine 702 may be, for example, the vehicle 502 from FIG. 5 or follower machine 104 from FIG. 1. The follower machine 702 may include a GPS unit, such as the GPS unit 112, and a path planning software, such as the path planning software 114. The follower machine 702 may contain a first point 708. The first point 708 may be a homepoint. The first point 708 may be located in a center of the follower machine 702 or may be located at another place within the follower machine 702. The first point 708 may be used to represent a position of the follower machine 702 within a coordinate system. The first point 708 may be used to obtain a current position (e.g., GPS position, offset position, position along a path) of the follower machine 702.

The implement 704 may be, for example, the implement 504 from FIG. 5 (e.g., a grain cart). The implement 704 may include a GPS unit and a path planning software. The implement 704 may contain a second point 710. The second point 710 may be a homepoint. The second point 710 may be located in a center of the implement 704 or may be located at another place within the implement 704. The second point 710 may be used to represent a position of the implement 704 within a coordinate system. The second point 710 may be used to obtain a current position (e.g., GPS position, offset position, position along a path) of the implement 704.

The leader machine 706 may be, for example, the leader machine 102 from FIG. 1. The leader machine 706 may include a GPS unit, such as the GPS unit 108, and a path planning software, such as the path planning software 110. The leader machine 706 may contain a third point 712. The third point 712 may be a homepoint. The third point 712 may be located near a front of the leader machine 706 or may be located at another place within the leader machine 706. The third point 712 may be used to represent a position of the leader machine 706 within a coordinate system. The third point 712 may be used to obtain a current position (e.g., GPS position, offset position, position along a path) of the leader machine 706.

The follower machine 702 may be configured to follow (e.g., autonomously) a follower path plan 714 through, for example, a field. The path planning software of the follower machine 702 may be used to obtain (e.g., identify, select, or receive) the follower path plan 714. In some implementations, the path planning software of the follower machine 702 may be used to obtain an implement path plan 716 for the implement 704. The follower machine 702 may include an autonomous navigation system to adjust its position based on one or more of the follower path plan 714, the first point 708, the second point 710, the third point 712, or a homepoint.

The implement 704 may follow (e.g., be towed upon or maintain a position along) the implement path plan 716 through, for example, a field. The path planning software of the implement 704 may be used to obtain (e.g., identify, select, or receive) the implement path plan 716. In some implementations, the path planning software of the implement 704 may be used to obtain the follower path plan 714 for the follower machine 702. The implement 704 may include a navigation system and a communication system to communicate to the follower machine 702 to adjust the position of the implement 704 based on one or more of the implement path plan 716, the first point 708, the second point 710, the third point 712, or a homepoint.

The leader machine 706 may be configured to follow (e.g., autonomously) a leader path plan 718 through, for example, a field. The path planning software of the leader machine 706 can be used to obtain (e.g., identify, select, or receive) the leader path plan 718. In some implementations, the path planning software of the leader machine 706 may be used to obtain one or both of the follower path plan 714 for the follower machine 702 or the implement path plan 716 for the implement 704. The follower machine 702 may include an autonomous navigation system to adjust its position based on one or more of the leader path plan 718, the first point 708, the second point 710, the third point 712, or a homepoint.

The leader path plan 718 may be derived based on the traversal of the field by another or prior machine, such as a planter that has previously sown seeds in the field. For example, farmers need only place an implement receiver on their planter or strip-till rig during the first pass to map the necessary data. The path of traversal of the field by another or prior machine may be referred to as historical path data. Subsequently, path planning software, such as the path planning software 110 of FIG. 1, may automatically generate guidance lines for subsequent passes, such as planting, spraying, or harvesting, regardless of equipment width. In an example, the leader path plan 718 may be generated by a path planning software of the leader machine 706, the follower machine 702, or the implement 704 based on the historical path data. In another example, the leader path plan 718 may be generated by a remote system, such as the remote configuration system 118 of FIG. 1 and received by the path planning software. In such a case, the leader path plan 718 is said to be generated offboard (i.e., not at the leader machine 706 itself). This automation ensures that each pass begins quickly and confidently, enhancing the efficiency of farming operations by maintaining established guidance lines and reducing the risk of partial width passes. By generating guidance lines, yield potential can be protected by accurately planting rows to optimize nutrient investment and minimizing soil disturbance, while keeping machine tires between rows to prevent crop damage throughout the growing season.

A kinematic model of the leader machine 706, for example, the leader kinematic model, may be used in determining the implement path plan 716. The kinematic model may be used to identify an operational parameter of the leader machine 706. The operational parameter may be distance or measurement that defines the relative position of a first machine (e.g., the leader machine 706) to a second machine (e.g., the follower machine 702 or the implement 704). For example, the operational parameter may represent a length of an auger of the leader machine 706. The operational parameter may be or indicate a lateral offset 720 (e.g., an alignment) of the implement 704 with respect to the leader machine 706. The lateral offset 720 may be such that, based on the operational parameter (e.g., the auger length), the endpoint (e.g., snout) of the auger aligns with a center of the implement 704 (e.g., the second point 710). A homepoint (e.g., a point in the leader machine 706 fixed coordinate system that may be based on a GPS unit of the leader machine 706) may be based on the operational parameter. The homepoint may be thought of as a point in space that moves with the fixed coordinate system of the leader machine 706.

The implement path plan 716 may be determined (e.g., derived, calculated, identified) based on the leader path plan 718 and a kinematic model of one or more of the leader machine 706 (e.g., the leader kinematic model), the follower machine 702 (e.g., the follower kinematic model), or the implement 704 (e.g., the implement kinematic model). The implement path plan 716 may be based on the lateral offset 720. In an example, the implement path plan 716 may be derived by a configuration system, for example, the remote configuration system 118 of FIG. 1, and transmitted to at least one of the leader machine 706, the follower machine 702, or the implement 704 (e.g., to a path planning software therein). In another example, the implement path plan 716 may be generated by a path planning software of the leader machine 706, the follower machine 702, or the implement 704 based on the leader path plan 718.

The implement path plan 716 may be characterized by the lateral offset 720 or the homepoint. The implement path plan 716 may mirror (e.g., be parallel to) the leader path plan 718 but is offset by the lateral offset 720. If the leader path plan 718 is derived based on the traversal of the field by another or prior machine, noise (e.g., deviations) that may be translated or amplified into the implement path plan 716 may be minimized in the implement path plan 716 and the follower path plan 714.

The implement path plan 716 may be used to determine (e.g., derive, calculate, identify) the follower path plan 714. The follower path plan 714 may be determined such that operating (e.g., navigating) the follower machine 702 according to the follower path plan 714 will maintain the implement 704 along the implement path plan 716. That is, because the implement 704 is connected to (e.g., towed by) the follower machine 702, the follower machine 702 is responsible for maintaining the implement 704 along the implement path plan 716. Accordingly, the follower path plan 714 may compensate for the distance between (e.g., a length of the connection) the follower machine 702 and the implement 704.

The follower path plan 714 may be determined by the follower machine 702, for example, using the path planning software of the follower machine 702. In another example, the follower path plan 714 may be determined remotely from the follower machine 702 and transmitted to the follower machine 702. For example, the follower path plan 714 may be determined by the leader machine 706 or by the implement 704. In some implementations, the follower path plan 714 may be generated by the remote configuration system and then transmitted to the follower machine 702.

The follower path plan 714 may be determined using, for example, inverse kinematics. Inverse kinematics may use, for example, one or more of the implement path plan 716, a kinematic model of the follower machine 702 (e.g., the follower kinematic model), a kinematic model of the implement 704 (e.g., the implement kinematic model), a kinematic model of the leader machine 706 (e.g., the leader kinematic model), a combined kinematic model of the follower machine 702 and the implement 704, the first point 708, the second point 710, or the third point 712 to determine the follower path plan 714.

Deriving the follower path plan 714 may use inverse kinematics. For example, the implement path plan 716 could be calculated from a known follower path plan 714 using forward kinematics. Forward kinematics may calculate a position of the implement 704 based on a location of the follower machine 702 and parameters of the system (e.g., kinematic models, a connection between the follower machine 702 and the implement 704, points of rotation, wheel locations, geometric parameters, and the like). Alternatively, as described herein, this forward kinematics process may be performed in reverse (e.g., deriving the follower path plan 714 from the implement path plan 716) using inverse kinematics. Inverse kinematics may use a desired position of the implement 704 and the parameters of the system to derive the location of the follower machine 702 required to place the implement 704 at a desired position along the implement path plan 716. Repeating this process for a series of positions along the implement path plan 716 can generate a corresponding follower path plan 714 that maintains the implement 704 along the implement path plan 716. The inverse kinematic process may rely on iterative optimization to seek out an increasingly accurate approximate solution. Alternatively, the follower path plan 714 may be derived from the implement path plan 716 using methods other than inverse kinematics, for example, machine learning techniques, feedback loops, numerical optimization, or the like, or other methods hereafter developed. In another example, the follower path plan 714 may be derived using geometric techniques based on information from sensors or assumptions.

During straight portions of the implement path plan 716, the follower path plan 714 may be configured to overlap with the implement path plan 716. During curved portions of the implement path plan 716, the follower path plan 714 may be configured to follow a longer path around the curve (e.g., a wider path or a curve with a larger radius) to maintain the implement 704 along the implement path plan 716.

FIG. 8 is a flowchart of an example of a technique 800 for navigating a follower machine according to a follower path plan derived from an implement path plan. The technique 800 can be executed using computing devices, such as the systems, hardware, and software described with respect to FIGS. 1-4. The technique 800 can be performed, for example, by executing a machine-readable program or other computer-executable instructions, such as routines, instructions, programs, or other code. The steps, or operations, of the technique 800, or another technique, method, process, or algorithm described in connection with the implementations disclosed herein can be implemented directly in hardware, firmware, software executed by hardware, circuitry, or a combination thereof. The technique 800 can be executed by a path planning software, such as the path planning software 110 or the path planning software 114 of FIG. 1.

For simplicity of explanation, the technique 800 is depicted and described herein as a respective series of steps or operations. However, the steps or operations of the technique 800 in accordance with this disclosure can occur in various orders and/or concurrently. Additionally, other steps or operations not presented and described herein may be used. Furthermore, not all illustrated steps or operations may be required to implement a technique in accordance with the disclosed subject matter.

At 802, a current position of an implement attached to a first vehicle (e.g., a follower machine) is obtained. The current position may be represented by a center of the implement, for example, the second point 710 of FIG. 7. The implement may obtain the current position as a GPS position, an offset position relative to the vehicle, a position along a path, or the like. The implement may include a GPS unit or sensers to obtain the current position. In some implementations, the vehicle obtains the current position of the implement. For example, the vehicle may include sensors configured to detect the current position of the implement. Obtaining the current position of the implement may include setting a homepoint at the current position of the implement. For example, the homepoint may be set at the second point 710 of FIG. 7. The homepoint may be set relative to another machine such that movement of the other machine is reflected as movement of the homepoint.

At 804, a path plan for a second vehicle (e.g., a leader machine) is identified. The path plan for the second vehicle may be the leader path plan 718 of FIG. 7. The path plan for the second vehicle may be based on historical path data. The path plan for the second vehicle may be derived based on the traversal of the field by another or prior machine, such as a planter that has previously sown seeds in the field. The path of traversal of the field by another or prior machine may be referred to as historical path data. In an example, the path plan for the second vehicle may be generated based on the historical path data by a path planning software of the first vehicle, the second vehicle, or the implement. In another example, the path plan for the second vehicle can be generated by a remote system, such as the remote configuration system 118 of FIG. 1 and received by the path planning software. In such a case, the path plan for the second vehicle is said to be generated offboard (i.e., not at the second vehicle itself).

In another example, the path plan for the second vehicle may be generated in real time. The path plan for the second vehicle may be generated by an operator of the second vehicle, for example, as the operator navigates the second vehicle through the field. For example, the homepoint set at 802 may be set at the current position of the implement and set relative to the second vehicle such that movement of the second vehicle is reflected as movement of the homepoint. That is, the path plan for the second vehicle may be represented as movement of the homepoint.

At 806, a path plan for the implement (e.g., an implement path plan) is identified. The path plan for the implement may be based on the path plan for the second vehicle. For example, the path plan for the implement may be at a constant offset from the path plan for the second vehicle. That is, the path plan for the implement may mirror the path plan for the second vehicle at a constant offset from the path plan for the second vehicle. In another example, the path plan for the implement may be identified based on the path plan for the second vehicle generated in real time. Identifying the path plan for the implement may include detecting a movement of the homepoint to a new location (e.g., movement of the second vehicle) and determining a path plan (e.g., a next position) for the implement based on the movement of the homepoint. The path plan for the implement may be identified in real time to maintain a position of the implement with respect to the homepoint.

The path plan for the implement may be based on an operational parameter of the second vehicle. For example, the second vehicle may be a combine harvester that includes an auger, the first vehicle may be a tractor, and the implement may be a grain cart. The implement may be configured to receive harvested crop (e.g., grain) from the second vehicle via the auger. As such, the operational parameter of the second vehicle may be or include the length of the auger and/or an offset location of the endpoint (e.g., snout) of the auger with respect to a reference point or line (e.g., centerline or a GPS unit) of the implement (e.g., the second point 710 of FIG. 7).

Obtaining the operational parameter may include identifying an alignment point (or a homepoint) between the second vehicle and the implement or between the second vehicle and the first vehicle.

In an example, the operational parameter can be obtained using a kinematic model of the second vehicle (e.g., the leader kinematic model). To illustrate, the operational parameter may be obtained based on dimensions of the second vehicle and a location of the auger relative to a GPS unit of the second vehicle. In an example, the operational parameter can be obtained using a combination of two or more of the kinematic model of the second vehicle, a kinematic model of the first vehicle (e.g., the follower kinematic model), or a kinematic model of the implement (e.g., the implement kinematic model). To illustrate, the kinematic model of the implement may be used to specifically align a particular aspect of the second vehicle (e.g., the snout of the auger) to a particular aspect of the implement (e.g., the center of a grain cart).

The path plan for the implement may be identified (e.g., generated) at the implement or identified remotely. In an example, a path planning software of the implement may obtain relevant dimensions of the second vehicle and the path plan for the second vehicle and generate the path plan for the implement locally (i.e., on board). In another example, the path plan for the implement can be generated remotely (i.e., off board) by a configuration system, such as the configuration system 118 of FIG. 1. In another example, the path plan for the implement can be generated remotely by a path planning software of the first vehicle, such as the path planning software 114, or by a path planning software of the second vehicle, such as the path planning software 110. For example, the implement may transmit a path plan request (e.g., a request to receive the path plan for the implement) to the configuration system, the first vehicle, or the second vehicle, which then generates the path plan for the implement. The path plan for the implement may be transmitted to the implement, stored for use in deriving the path plan for the first vehicle, or transmitted to the configuration system, the first vehicle, or the second vehicle for use in deriving the path plan for the first vehicle. The path plan request may include an identifier of the second vehicle, which the configuration system may use to identify the relevant dimensions of the second vehicle and the path plan for the second vehicle.

At 808, a path plan for the first vehicle is derived based on the path plan for the implement. The path plan for the first vehicle may be derived such that operating the first vehicle according to the path plan for the first vehicle would maintain the implement along the path plan for the implement. The path plan for the first vehicle may be derived using, for example, inverse kinematics. The path plan for the first vehicle may be derived in real time based on a path plan for the implement identified in real time. That the path plan is generated in real time includes that the a next position for the first vehicle may be determined in real time (e.g., at each time step).

The path plan for the first vehicle can be identified (e.g., generated) at the first vehicle or remotely. In an example, a path planning software of the first vehicle, such as the path planning software 114 of FIG. 1, may obtain the path plan for the implement and generate the path plan for the first vehicle locally (i.e., on board). In another example, the path plan for the first vehicle may be generated remotely (i.e., off board) by a configuration system, such as the configuration system 118 of FIG. 1. In another example, the path plan for the first vehicle can be generated remotely by a path planning software of the second vehicle, such as the path planning software 110, or by a path planning software of the implement. For example, the first vehicle may transmit a path plan request (e.g., a request to receive the path plan for the first vehicle) to the configuration system, the second vehicle, or the implement, which then generates the path plan for the first vehicle. The path plan for the first vehicle may be transmitted to the first vehicle or stored for later use. The path plan request may include an identifier of the implement, which the configuration system may use to identify the relevant dimensions of the implement and the path plan for the implement.

At 810, the technique 800 may wait for the first vehicle to reach an operational zone. The operational zone may be an area located within a specified distance of the second vehicle. That is, the operational zone can be a designated area (e.g., a geo fence) around the second vehicle where the first vehicle can effectively synchronize its movements and operations. The operational zone may be, for example, an area proximate to a side (e.g., a left side or a right side) of the second vehicle. The operational zone may be defined based on the positional data of the second vehicle. The operational zone may be defined based on historical data associated with the first vehicle or the second vehicle. Setting the homepoint may be triggered when the first vehicle enters the operational zone, as detected by the GPS units or other positional sensors. When the first vehicle enters the operational zone, the first vehicle may be guided to align itself with the second vehicle (e.g., at the homepoint) to perform synchronized operations. For example, in the context of a tractor (e.g., the first vehicle, the follower machine) pulling a grain cart (e.g., the implement) and a combine harvester (e.g., the second vehicle, the leader machine), the operational zone may be the area to the side of the combine harvester where the tractor can position the grain cart to receive the grain from the combine harvester's unloading auger. The path planning software of the first vehicle may be configured to ensure that once the first vehicle enters the operational zone it may be guided to the precise homepoint for efficient and accurate unloading.

At 812, the technique 800 may check if the first vehicle has reached the operational zone. If the first vehicle has reached the operational zone, the technique 800 may proceed to 814. If the first vehicle has not reached the operational zone, the technique 800 may return to 810 and continue waiting for the first vehicle to reach the operational zone. After the first vehicle reaches the operational zone, the first vehicle may acquire at least one of the path plan for the first vehicle, a homepoint for the first vehicle, or a homepoint for the implement. For example, the first vehicle may send a signal to the configuration system, such as the configuration system 118 of FIG. 1, to request the path plan for the first vehicle, the homepoint for the first vehicle, or the homepoint for the implement.

The homepoint for the first vehicle may be located along the path plan for the first vehicle. In an example, the path plan for the first vehicle and the homepoint for the first vehicle are determined by the first vehicle. In another example, one or both of the path plan for the first vehicle or the homepoint for the first vehicle are determined remotely from the first vehicle and transmitted to the first vehicle. For example, the path plan for the first vehicle or the homepoint for the first vehicle may be determined by the second vehicle or by the implement. The technique 800 may receive, such as from the first vehicle, identifiers of the first vehicle and the second vehicle, may obtain the operational parameter of the path plan for the second vehicle, may obtain the path plan for the second vehicle, may identify the path plan for the implement, may derive the path plan for the first vehicle at the remote configuration system, and may cause the path plan for the first vehicle to be transmitted to the first vehicle. After acquiring the path plan for the first vehicle, the first vehicle may display at least a portion of the path plan for the first vehicle at a display associated with the first vehicle. Acquiring the homepoint for the first vehicle may also acquire the homepoint for the implement. That is, the homepoint for the first vehicle and the homepoint for the implement may be at a constant offset.

At 814, the first vehicle may be navigated according to the path plan for the first vehicle. Navigating the first vehicle according to the path plan for the first vehicle may navigate the implement along the path plan for the implement. Navigating the first vehicle according to the path plan for the first vehicle may include navigating the first vehicle to the homepoint for the first vehicle. Navigating the first vehicle to the homepoint for the first vehicle may place the implement at the homepoint for the implement. After reaching the homepoint for the first vehicle, the first vehicle may operate according to the path plan for the first vehicle. As described above, the homepoint for the first vehicle enables an alignment of the first vehicle to the second vehicle. For example, the alignment may align an unloading auger of the second vehicle to a relative position (e.g., the center) of the implement. However, the relative position may be any other position within the cart suitable for aligning the unloading auger. In an example, the relative position may be selected (e.g., determined, identified, set, etc.) by an operator of the first vehicle or an operator of the second vehicle. Additionally, GPS coordinates associated with the second vehicle may be received to assist in this calculation. Various transformations and calculations may be performed to calculate the homepoint for the first vehicle, as described herein.

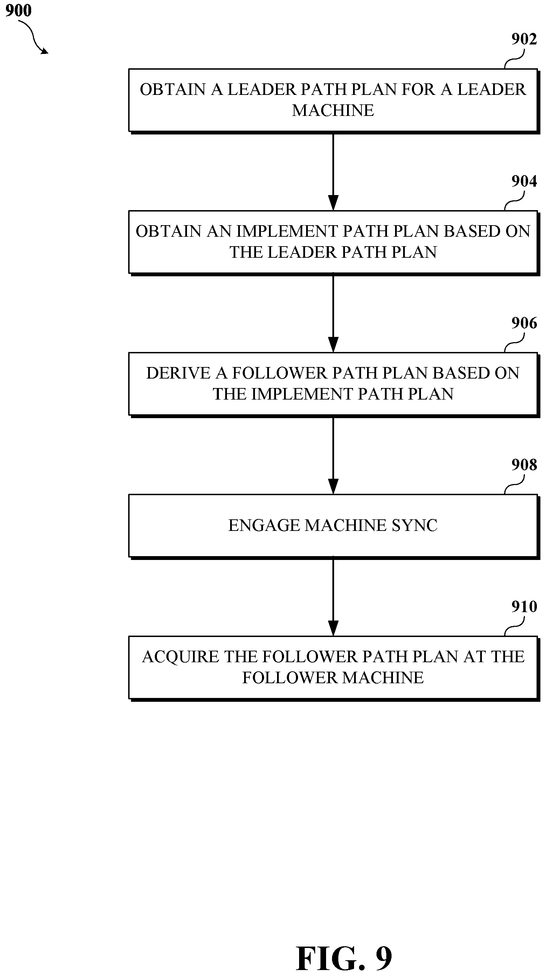

FIG. 9 is a flowchart of an example of a technique 900 for deriving a follower path plan for a follower machine based on an implement path plan for an implement connected to (e.g., towed by) the follower machine. The implement path plan may be at a constant offset from a leader path plan for a leader machine. The technique 900 can be executed using computing devices, such as the systems, hardware, and software described with respect to FIGS. 1-4. The technique 900 can be performed, for example, by executing a machine-readable program or other computer-executable instructions, such as routines, instructions, programs, or other code. The steps, or operations, of the technique 900, or another technique, method, process, or algorithm described in connection with the implementations disclosed herein can be implemented directly in hardware, firmware, software executed by hardware, circuitry, or a combination thereof. The technique 900 can be executed by a path planning software, such as the path planning software 110 or the path planning software 114 of FIG. 1.

For simplicity of explanation, the technique 900 is depicted and described herein as a respective series of steps or operations. However, the steps or operations of the technique 900 in accordance with this disclosure can occur in various orders and/or concurrently. Additionally, other steps or operations not presented and described herein may be used. Furthermore, not all illustrated steps or operations may be required to implement a technique in accordance with the disclosed subject matter.

At 902, a leader path plan for a leader machine is obtained. The leader path plan may be derived based on the traversal of the field by another or prior machine, such as a planter that has previously sown seeds in the field. The path of traversal of the field by another or prior machine may be referred to as historical path data. In an example, the leader path plan may be generated by a path planning software of the leader machine, the follower machine, or the implement based on the historical path data. In another example, the leader path plan may be generated by a remote system, such as the remote configuration system 118 of FIG. 1 and received by the path planning software. In such a case, the leader path plan is said to be generated offboard (i.e., not at the leader machine itself).

At 904, an implement path plan is obtained based on the leader path plan. As described herein, the implement path plan may mirror the leader path plan and may be at a constant offset from the leader path plan.

The implement path plan may be identified (e.g., generated) at the implement or remotely. In an example, a path planning software of the implement may obtain relevant dimensions of the leader machine and the leader path plan and generate the implement path plan locally (i.e., on board). In another example, the implement path plan may be generated remotely (i.e., off board) by a configuration system, such as the configuration system 118 of FIG. 1. In another example, the implement path plan may be generated remotely by a path planning software of the leader machine, such as the path planning software 110, or by a path planning software of the follower machine, such as the path planning software 114. For example, the implement may transmit an implement path plan request to the configuration system, the leader machine, or the follower machine, which generates the implement path plan. The implement path plan may be transmitted to the implement, stored for use in deriving the follower path plan, or transmitted to the configuration system, the leader machine, or the follower machine for use in deriving the follower path plan. The implement path plan request can include an identifier of the leader machine, which the configuration system can use to identify the relevant dimensions of the leader machine and the leader path plan.

At 906, a follower path plan is derived based on the implement path plan. The follower path plan may be derived such that operating the follower machine according to the follower path plan would maintain the implement along the implement path plan. The follower path plan may be derived using, for example, inverse kinematics.

The follower path plan can be identified (e.g., generated) at the follower machine or remotely. In an example, a path planning software of the follower machine, such as the path planning software 114 of FIG. 1, may obtain the implement path plan and generate the follower path plan locally (i.e., on board). In another example, the follower path plan can be generated remotely (i.e., off board) by a configuration system, such as the configuration system 118 of FIG. 1. In another example, the follower path plan can be generated remotely by a path planning software of the leader machine, such as the path planning software 110, or by a path planning software of the implement. For example, the follower machine may transmit a follower path plan request to the configuration system, leader machine, or implement, which generates the follower path plan and transmits the follower path plan to the follower machine. The follower path plan request can include an identifier of the implement, which the configuration system can use to identify the relevant dimensions of the implement and the implement path plan.

At 908, the technique 900 engages machine sync (e.g., machine synchronization). Machine sync may be an automated machine coordination system (e.g., software) installed on one or both of the leader machine and the follower machine. Machine sync may be engaged when the follower machine enters an operational zone. Machine sync may be used to transmit information between the leader machine and the follower machine, for example, speed, position, direction of travel, and the like. Machine sync may be used to control (e.g., autonomously) the follower machine along the follower path plan and the leader machine along the leader path plan. Machine sync may be used to control a speed and position of the follower machine. For example, machine sync may match the speed of the follower machine to a speed of the leader machine. Machine sync may be a communication between the leader machine and the follower machine, for example, across the communication path 116 of FIG. 1. Machine sync may use location information from the follower machine and the leader machine to control the follower machine. For example, machine sync may prevent the follower machine from making contact with the leader machine and may ensure that the follower machine remains within a specified distance of the leader machine. In another example, machine sync may periodically reposition a grain cart (e.g., the implement) with respect to the leader machine to ensure even distribution of material into the grain cart.

At 910, the follower path plan is acquired at the follower machine. A homepoint may be acquired with the follower path plan. The homepoint may be located along the follower path plan. In an example, the follower path plan and the homepoint are determined by the follower machine. The homepoint may be set by an operator of the follower machine. In another example, one or both of the follower path plan or the homepoint are determined remotely from the follower machine and transmitted to the follower machine. For example, the follower path plan or the homepoint may be determined by the leader machine or by the implement. In some implementations, the follower path plan may be generated by the remote configuration system and then transmitted to the follower machine. After acquiring the follower path plan, the follower machine may navigate to the homepoint. After reaching the homepoint, the follower machine may navigate according to the follower path plan. In some implementations, the follower machine may display at least a portion of the follower path plan at a display associated with the follower machine.

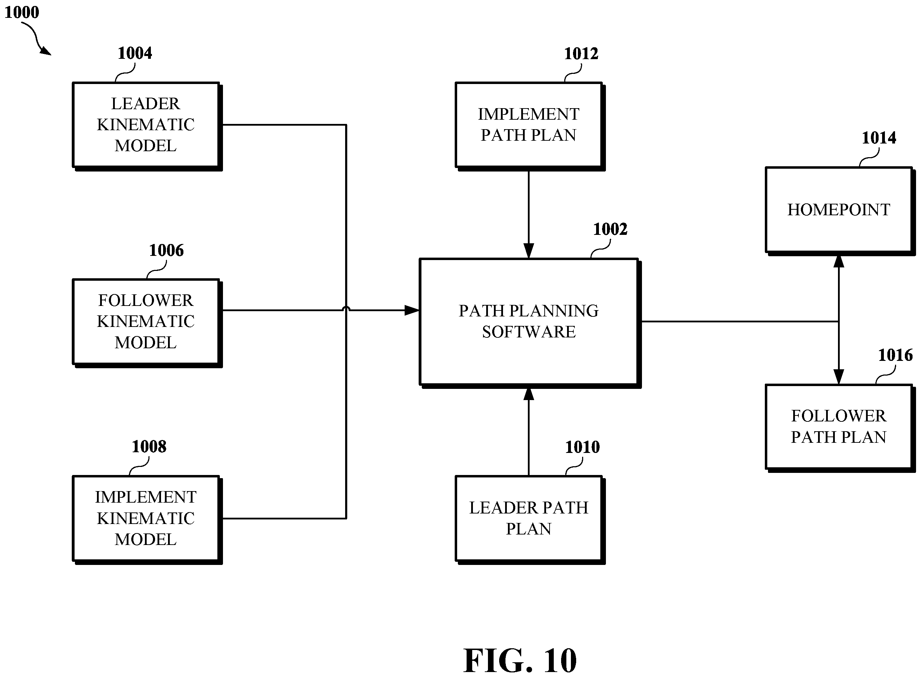

FIG. 10 is a block diagram 1000 illustrating identifying a follower path plan. A path planning software 1002, such one of the path planning software 110 or path planning software 114 of FIG. 1, uses a leader kinematic model 1004 associated with a leader machine, a follower kinematic model 1006 associated with a follower machine, an implement kinematic model 1008 associated with an implement attached to the follower machine, a leader path plan 1010, and an implement path plan 1012 to set (e.g., determine or calculate) a homepoint 1014 and a follower path plan 1016. The leader path plan 1010, the implement path plan 1012, and the follower path plan 1016 can be digitally represented in any suitable data structure or format.

In an example, the path planning software 1002 may receive identifiers associated with the leader machine, the follower machine, and the implement to retrieve the corresponding kinematic models.

In an example, when a particular cart is connected to a follower, the operator may select, via user interfaces associated with the path planning software 114, the implement via machine configurator or via work plans sent from an operations center to path planning software 114. When a connection is established between the leader and follower, the leader/follower information can be automatically shared between the leader and follower machines over a communication path, such as the communication path 116. As such, the parameters (e.g., measurements) of the respective kinematic models can be created and shared to set the homepoint. As already described, a homepoint can be set by summing the positions in X/Y coordinates to appropriately place the initial homepoint.

The follower path plan 1016 may be derived from the implement path plan 1012 and be characterized by the homepoint 1014, which can be used to identify a lateral offset between the leader machine and the implement taking into consideration an operational parameter of the leader machine. As already mentioned, the operational parameter can be a length of an auger of the leader machine. The implement path plan 1012 can mirror (e.g., can be parallel to) the leader path plan 1010 and the follower path plan 1016 may be derived such that operating the follower machine along the follower path plan 1016 will maintain the implement along the implement path plan 1012.

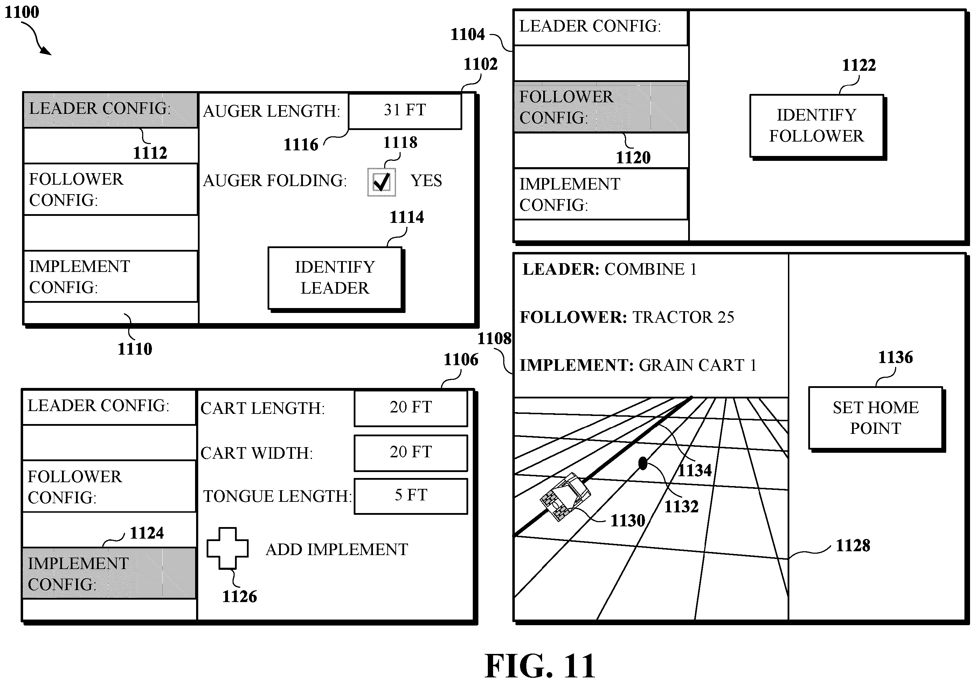

FIG. 11 illustrates user interfaces 1102-1108 associated with a path planning software, such as one of the path planning software 110 or path planning software 114 of FIG. 1. The user interfaces 1102-1108 enable an operator, for example an operator of a follower machine or a leader machine, to select and/or configure the leader machine, the follower machine, and/or one or more implements connected to the follower machine. That is, the user interfaces 1102-1108 may allow an operator to cause the path planning software to perform all or a portion of the technique 600, the technique 800, or the technique 900. The user interfaces 1102-1106 include a machine selection area 1110 that includes controls selectable by the operator. It is noted that the disclosure herein is not limited to or by the user interfaces 1102-1108 described herein. For example, more, fewer, or different arrangements or user interface controls are possible. The user interfaces 1102-1108 are further described from the perspective of an operator of the follower machine. That is, the user interfaces 1102-1108 are assumed to be presented to an operator of the follower machine via a path planning software, such as the path planning software 114 of FIG. 1.

In response to selecting a control 1112, the user interface 1102 can be displayed by the path planning software enabling the operator to select and/or configure the leader machine. For example, by selecting control 1116, the path planning software enables the operator to select the leader machine. For example, the path planning software may enable the operator to select the leader machine from available leader machines. The available leader machines may be associated with a particular farming operations, farmer, or organization. In another example, and as described above, the leader machine may automatically be identified and selected by the path planning software, such as based on a proximity of the follower machine to the leader machine and/or in response to a connection path, such as the communication path 116 of FIG. 1, being established between the follower and leader machines. The leader kinematic model is then identified (e.g., selected, obtained, retrieved, etc.) in response to the leader machine being identified.

As mentioned above, certain components of the leader machine may be replaceable or exchangeable. For example, the auger of a combine may be changeable. As such, the user interface 1102 enables the operator, such as via controls 1116-1118, to configure additional parameters of the leader kinematic model. While not specifically shown, the user interface 1102 may also include (e.g., display) parameters of the identified leader kinematic model. For example, the user interface 1102 may additionally display the GPS lateral offset and the GPS inline offset of the GPS unit of the leader machine, and the lateral turret offset, the auger pitch, amongst other parameters of the leader kinematic model.

In response to selecting a control 1120, the user interface 1104 can be displayed by the path planning software, enabling the operator to select and/or configure the follower machine. For example, by selecting control 1122, the path planning software enables the operator to identify the follower machine. The path planning software may enable the operator to select the follower machine from a list of available follower machines. Once the follower machine is identified, the follower kinematic model can then be identified (e.g., selected, obtained, retrieved, etc.) accordingly.

The user interface 1104 may enable the operator to configure various parameters of the follower kinematic model, such as connection type (e.g., drawbar, rear three-point connection, front three-point connection, wagon hitch, etc.) of an implement. The user interface 1104 may display parameters of the identified follower kinematic model. For example, the user interface 1104 may display the GPS lateral offset and the GPS inline offset of the GPS unit of the follower machine as well as the connection offset (such as the offset of a drawbar, the offset of a rear three-point connection, an offset of a front three-point connection, an offset of a wagon hitch, as the case may be).

In response to selecting a control 1124, the user interface 1106 can be displayed by the path planning software, enabling the operator to configure implements (e.g., zero or more implements) attached to the follower machine. For example, the user interface 1106 enables the operator to input or modify various parameters of an implement, such as the cart length, cart width, and tongue length. The user interface 1106 includes controls that enable the operator to add additional implements by selecting control 1126, which opens additional configuration options for the new implement. To identify an implement, the operator may select from a list of available implements types.

The user interface 1106 may display parameters of the identified implement kinematic model, providing fields for the operator to input specific measurements. For instance, the operator can enter the length and width of the grain cart, as well as the length of the tongue connecting the cart to the tractor. The user interface 1106 may display additional parameters of an implement kinematic model. When more than one implement is added as an attachment to the follower machine, the user interface 1106 enables the operator to provide (e.g., enter) parameters (e.g., dimensions) related to the connection (e.g., rear connection) between the added implement and the implement to which the added implement will be attached.

After the operator configures the leader machine, the follower machine, and the implement(s), the path planning software obtains the leader path plan of the leader machine to identify the follower path plan of the follower machine. The leader path plan can be obtained from the leader machine itself or from a remote configuration system, such as the remote configuration system 118 of FIG. 1. In an example, the path planning software may obtain the follower path plan from the remote configuration system. For example, the path planning software of the follower machine may transmit, to the remote configuration system, identifiers of the follower machine, leader machine, and/or implement and receive, from the remote configuration system, the follower path plan.

The user interface 1108 includes a virtual map 1128, which visually represents a follower machine 1130, a calculated homepoint 1132, and at least a portion of the follower path plan (e.g., a guidance line 1134 of the follower path plan). The purpose of this user interface is to guide the alignment of the follower machine 1130 with the homepoint 1132 and identify to an occupant (e.g., an operator) of the follower machine the traversal lines of the follower machine.

A control 1136 may be used by the operator to initiate or confirm the alignment process. By selecting the control 1136, the operator can command the follower machine to start moving according to the follower path plan, either manually or autonomously.

While the disclosure has been described in connection with certain embodiments, it is to be understood that the disclosure is not to be limited to the disclosed embodiments but, on the contrary, is intended to cover various modifications and equivalent arrangements included within the scope of the appended claims, which scope is to be accorded the broadest interpretation so as to encompass all such modifications and equivalent structures as is permitted under the law.

Persons skilled in the art will understand that the various embodiments of the present disclosure and shown in the accompanying figures constitute non-limiting examples, and that additional components and features may be added to any of the embodiments discussed hereinabove without departing from the scope of the present disclosure. Additionally, persons skilled in the art will understand that the elements and features shown or described in connection with one embodiment may be combined with those of another embodiment without departing from the scope of the present disclosure to achieve any desired result and will appreciate further features and advantages of the presently disclosed subject matter based on the description provided. Variations, combinations, and/or modifications to any of the embodiments and/or features of the embodiments described herein that are within the abilities of a person having ordinary skill in the art are also within the scope of the present disclosure, as are alternative embodiments that may result from combining, integrating, and/or omitting features from any of the disclosed embodiments.

Use of the term "optionally" with respect to any element of a claim means that the element may be included or omitted, with both alternatives being within the scope of the claim. Additionally, use of broader terms such as "comprises," "includes," and "having" should be understood to provide support for narrower terms such as "consisting of," "consisting essentially of," and "comprised substantially of." Accordingly, the scope of protection is not limited by the description set out above, but is defined by the claims that follow, and includes all equivalents of the subject matter of the claims.

In the preceding description, reference may be made to the spatial relationship between the various structures illustrated in the accompanying drawings, and to the spatial orientation of the structures. However, as will be recognized by those skilled in the art after a complete reading of this disclosure, the structures described herein may be positioned and oriented in any manner suitable for their intended purpose. Thus, the use of terms such as "above," "below," "upper," "lower," "inner," "outer," "left," "right," "upward," "downward," "inward," "outward," "horizontal," "vertical," etc., should be understood to describe a relative relationship between the structures and/or a spatial orientation of the structures. Those skilled in the art will also recognize that the use of such terms may be provided in the context of the illustrations provided by the corresponding figure(s).

Additionally, terms such as "approximately," "generally," "substantially," and the like should be understood to allow for variations in any numerical range or concept with which they are associated and encompass variations on the order of 25% (e.g., to allow for manufacturing tolerances and/or deviations in design). For example, the term "generally parallel" should be understood as referring to configurations in with the pertinent components are oriented so as to define an angle therebetween that is equal to 180° ± 25% (e.g., an angle that lies within the range of (approximately) 135° to (approximately) 225°). The term "generally parallel" should thus be understood as referring to encompass configurations in which the pertinent components are arranged in parallel relation.

Although terms such as "first," "second," "third," etc., may be used herein to describe various operations, elements, components, regions, and/or sections, these operations, elements, components, regions, and/or sections should not be limited by the use of these terms in that these terms are used to distinguish one operation, element, component, region, or section from another. Thus, unless expressly stated otherwise, a first operation, element, component, region, or section could be termed a second operation, element, component, region, or section without departing from the scope of the present disclosure.

Each and every claim is incorporated as further disclosure into the specification and represents embodiments of the present disclosure. Also, the phrases "at least one of A, B, and C" and "A and/or B and/or C" should each be interpreted to include only A, only B, only C, or any combination of A, B, and C.
Embodiments of the invention can be described with reference to the following numbered clauses, with preferred features laid out in dependent clauses:
1. A method, comprising:
   obtaining a current position of an implement attached to a first vehicle;
   identifying a next position of the implement;
   deriving, based on the next position of the implement, a desired position of the first vehicle, wherein the desired position and the next position are such that when the first vehicle is at the desired position, the implement is at the next position; and
   navigating the first vehicle to the desired position.
2. The method of clause 1, wherein identifying the next position of the implement comprises:
   identifying the next position based on a path plan for the implement.
3. The method of clause 2, wherein the path plan for the implement is at a constant offset from a path plan for a second vehicle.
4. The method of clause 3, wherein the path plan for the second vehicle is based on historical path data.
5. The method of any one of clause 2 to 4, wherein deriving the desired position of the first vehicle comprises:
   deriving a path plan for the first vehicle;
   wherein the path plan for the first vehicle and the path plan for the implement are such that operating the first vehicle according to the path plan for the first vehicle maintains the implement along the path plan for the implement; and
   wherein navigating the first vehicle to the desired position comprises navigating the first vehicle according to the path plan for the first vehicle.
6. The method of any one of the preceding clauses, further comprising:
   setting a homepoint for the implement with respect to a second vehicle, wherein identifying the next position of the implement comprises:
   detecting a movement of the homepoint to a new location; and
   setting the next position of the implement to the new location.
7. The method of any one of the preceding clauses, wherein deriving the desired position of the first vehicle is based on the next position of the implement and an inverse kinematic model.
8. The method of any one of the preceding clauses, further comprising:
   determining, before navigating the first vehicle to the desired position, that the first vehicle is within an operational zone, wherein the operational zone is a designated area proximate to a second vehicle.
9. A system, comprising:
   one or more memories; and
   one or more processors, the processors configured to execute instructions stored in the one or more memories to:
      obtain a current position of an implement attached to a first vehicle;
      identify a next position of the implement;
      derive, based on the next position of the implement, a desired position of the first vehicle, wherein the desired position and the next position are such that when the first vehicle is at the desired position, the implement is at the next position; and
      navigate the first vehicle to the desired position.
10. The system of clause 9, wherein the instructions to identify the next position of the implement comprise instructions to:
   identify the next position based on a path plan for the implement.
11. The system of clause 10, wherein the path plan for the implement is at a constant offset from a path plan for a second vehicle.
12. The system of clause 10 or clause 11, wherein the instructions to derive the desired position of the first vehicle comprise instructions to:
   derive a path plan for the first vehicle;
   wherein the path plan for the first vehicle and the path plan for the implement are such that operating the first vehicle according to the path plan for the first vehicle maintains the implement along the path plan for the implement; and
   wherein the instructions to navigate the first vehicle to the desired position comprise instructions to:
      navigate the first vehicle according to the path plan for the first vehicle.
13. The system of any one of clauses 9 to 12, wherein the one or more processors are further configured to execute instructions stored in the one or more memories to:
   set a homepoint for the implement with respect to a second vehicle, wherein the instructions to identify the next position of the implement comprise instructions to:
   detect a movement of the homepoint to a new location; and
   set the next position of the implement to the new location.
14. The system of any one of clauses 9 to 13, wherein the instructions to derive the desired position of the first vehicle are based on the next position of the implement and an inverse kinematic model.
15. The system of any one of clauses 9 to 14, wherein the one or more processors are further configured to execute instructions stored in the one or more memories to:
   determine, before the instructions to navigate the first vehicle to the desired position, that the first vehicle is within an operational zone, wherein the operational zone is a designated area proximate to second vehicle.
16. One or more non-transitory computer readable media storing instructions operable to cause one or more processors to perform operations comprising:
   obtaining a current position of an implement attached to a first vehicle;
   identifying a next position of the implement;
   deriving, based on the next position of the implement, a desired position of the first vehicle, wherein the desired position and the next position are such that when the first vehicle is at the desired position, the implement is at the next position; and
   navigating the first vehicle to the desired position.
17. The one or more non-transitory computer readable media of clause 16, wherein identifying the next position of the implement comprises:
   identifying the next position based on a path plan for the implement at a constant offset from a path plan for a second vehicle.
18. The one or more non-transitory computer readable media of clause 17, wherein deriving the desired position of the first vehicle comprises:
   deriving a path plan for the first vehicle;
   wherein the path plan for the first vehicle and the path plan for the implement are such that operating the first vehicle according to the path plan for the first vehicle maintains the implement along the path plan for the implement; and
   wherein navigating the first vehicle to the desired position comprises:
      navigating the first vehicle according to the path plan for the first vehicle.
19. The one or more non-transitory computer readable media of any one of clauses 16 to 18, wherein the instructions are further operable to cause the one or more processors to perform operations comprising:
   setting a homepoint for the implement with respect to a second vehicle, wherein identifying the next position of the implement comprises:
   detecting a movement of the homepoint to a new location; and
   setting the next position of the implement to the new location.
20. The one or more non-transitory computer readable media of any one of clauses 16 to 19, wherein deriving the desired position of the first vehicle is based on the next position of the implement and an inverse kinematic model.

## Claims

1. A method, comprising:
obtaining a current position of an implement (504, 704) attached to a first vehicle (502, 702);
identifying a next position of the implement (504, 704);
deriving, based on the next position of the implement (504, 704), a desired position of the first vehicle (502, 702), wherein the desired position and the next position are such that when the first vehicle (502, 702) is at the desired position, the implement (504, 704) is at the next position; and
navigating the first vehicle (502, 702) to the desired position.

2. The method of claim 1, wherein identifying the next position of the implement (504, 704) comprises:
identifying the next position based on a path plan (510, 716) for the implement (504, 704).

3. The method of claim 2, wherein the path plan (510, 716) for the implement (504, 704) is at a constant offset (720) from a path plan (718) for a second vehicle (706).

4. The method of claim 3, wherein the path plan (718) for the second vehicle (706) is based on historical path data.

5. The method of claim 3 or 4, wherein a distance of the constant offset (720) is determined based on an operational parameter of the second vehicle (706).

6. The method of any of claims 2 to 5, wherein deriving the desired position of the first vehicle (502, 702) comprises:
deriving a path plan (512, 714) for the first vehicle (502, 702);
wherein the path plan (512, 714) for the first vehicle (502, 702) and the path plan (510, 716) for the implement (504, 704) are such that operating the first vehicle (502, 702) according to the path plan (512, 714) for the first vehicle (502, 702) maintains the implement (504, 704) along the path plan (510, 716) for the implement (504, 704); and
wherein navigating the first vehicle (502, 702) to the desired position comprises:
navigating the first vehicle (502, 702) according to the path plan (512, 714) for the first vehicle (502, 702).

7. The method of claim 6, further comprising:
displaying at least a portion of the path plan (512, 714) for the first vehicle (502, 702) at a display associated with the first vehicle (502, 702).

8. The method of any of claims 3 to 7, further comprising:
setting a homepoint for the implement (504, 704) with respect to the second vehicle (706), wherein identifying the next position of the implement (504, 704) comprises:
detecting a movement of the homepoint to a new location; and
setting the next position of the implement (504, 704) to the new location.

9. The method of any of claims 1 to 8, wherein deriving the desired position of the first vehicle (502, 702) is based on the next position of the implement (504, 704) and an inverse kinematic model.

10. The method of any of claims 1 to 9, further comprising:
determining, before navigating the first vehicle (502, 702) to the desired position, that the first vehicle (502, 702) is within an operational zone, wherein the operational zone is a designated area proximate to second vehicle.

11. The method of any of claims 1 to 10, wherein the desired position of the first vehicle (502, 702) is derived by the first vehicle (502, 702).

12. The method of any of claims 3 to **11,** wherein the next position of the implement (504, 704) is identified by the second vehicle (706), and the desired position of the first vehicle (502, 702) is derived by the second vehicle (706).

13. The method of any of claims 3 to 12, wherein the first vehicle (502, 702) is a tractor, the second vehicle (706) is a combine harvester, and the implement (504, 704) is a grain cart.

14. A system, comprising:
one or more memories (404); and
one or more processors (402) configured to execute instructions stored in the one or more memories (404) to perform the method of any one of claims 1 to 13.

15. A non-transitory computer-readable storage medium, comprising executable instructions that, when executed by one or more processors, facilitate performance of operations, the operations comprising operations that perform the method of any one of claims 1 to 13.
